**Europäisches Patentamt**

**European Patent Office**

**Office européen des brevets**

(19)

(11) Veröffentlichungsnummer: **0 143 148**
**A1**

(12) # EUROPÄISCHE PATENTANMELDUNG

(21) Anmeldenummer: **84103498.6**

(22) Anmeldetag: **29.03.84**

(51) Int. Cl.⁴: **G 06 F 7/24**, G 06 F 15/40

(30) Priorität: **23.09.83 DE 3334536**

(43) Veröffentlichungstag der Anmeldung: **05.06.85**
**Patentblatt 85/23**

(84) Benannte Vertragsstaaten: **AT BE CH DE FR GB IT LI NL SE**

(71) Anmelder: **Siemens Aktiengesellschaft, Berlin und München Wittelsbacherplatz 2, D-8000 München 2 (DE)**

(72) Erfinder: **Wolf, Gerhard, Dipl.-Ing., Chopinstrasse 5, D-8000 München 60 (DE)**

(54) **Verfahren und Anordnung zum Aufsuchen von in einem Hybrid-Assoziativspeicher gespeicherten Daten mit vertikal ausgerichteter Speicherung der einzelnen Zeichen der Daten abhängig von dem ihnen zugeordneten Rang, z.B. zum Sortieren der Daten.**

(57) Anwendung des durch die DE-PS 2 342 660 bekannten Sortierverfahrens auf große Datenmengen im Basisspeicher mit vertikaler Speicherung der einzelnen Datenzeichen von Daten und serieller, aber bitparalleler Prüfung der Datenzeichen durch die zugehörige Verknüpfungseinheit der assoziativen Oberfläche mit besonderen Maßnahmen zur Erzielung einwandfreier Ergebnisse bei über eine Zeichenlänge hinausgehenden Sortierbitmustern, nämlich die Zwischenspeicherung der bereits vollständigen Zeichen (z.B. BYTE 1) des Sortierbitmusters (SBM), die Herstellung von Trefferkettungen (KG, $T_K$) für aufeinanderfolgende Datenzeichen eines Datums (DAT) und die Überwachung der jeweiligen Kettungsbedingungen.

Davon ausgehend eine Vielzahl von Einzelmaßnahmen zur Verringerung des Zeitaufwandes für einen Sortiervorgang: Individuelle Kettungselemente unterschiedlicher Art, Parallelprüfung mehrerer Datenfolgen durch eigene assoziative Verknüpfungseinheiten, Hilfsspeicher zur Übernahme vorsortierter Datenteilmengen zwecks Endsortierung.

Ausnutzung des Sortierverfahrens für vergleichbare assoziative Aufgaben, z.B. Suche nach dem höchsten, niedrigsten oder nächstliegenden Wert.

0143148

SIEMENS AKTIENGESELLSCHAFT          Unser Zeichen
BERLIN UND MÜNCHEN                   VPA  83 P 1713 E

Verfahren und Anordnung zum Aufsuchen von in einem
Hybrid-Assoziativspeicher gespeicherten Daten mit
vertikal ausgerichteter Speicherung der einzelnen
Zeichen der Daten abhängig von dem ihnen zugeordneten
Rang, z.B. zum Sortieren der Daten.

---

Die Erfindung betrifft ein Verfahren und eine Anordnung
zum Aufsuchen von in einem Hybrid-Assoziativspeicher
gespeicherten Daten gemäß dem Oberbegriff des Patentanspruchs 1.

Hybrid-Assoziativspeicher sind bereits bekannt, z.B.
durch DE-AS 25 25 287  oder durch "data report" 11
(1976), Heft 2, Seiten 29 bis 34. Auch sind bereits
eine Reihe von Verfahren bekannt, unter anderem
durch die DE-PS 23 42 660, um in einem Assoziativspeicher gespeicherte Daten nach einer vorgegebenen Rangordnung durch treffergesteuerte Einstellung eines Sortierbitmusters mit Maske zu sortieren. Die Anwendung des
bekannten Sortierverfahrens nach der DE-PS 23 42 660
auf Hybrid-Assoziativspeicher ist u.a. durch die
DE-OS 30 09 330  bekannt.

Der Vorteil von Hybrid-Assoziativspeichern, die aus
einer assoziativen Oberfläche und einem normalen Zugriffspeicher als Basisspeicher bestehen, gegenüber
reinen Assoziativspeichern besteht vor allem in der
kostengünstigeren Speicherung großer Datenmengen. Dabei
spielt die Ausrichtung der Speicherung von Datenfolgen
in vertikaler oder horizontaler Richtung bezüglich der
Leistungsfähigkeit des Hybrid-Assoziativspeichers eine
entscheidende Rolle. Allgemein ist die horizontale Aus-

Kt 1 Stl / 29.08.83

richtung der Daten vorteilhafter, wobei jedoch die Speicherbreite gegebenenfalls die Längen der Datenfolgen begrenzt.

Das bekannte Sortierverfahren setzt ebenfalls eine horizontale Ausrichtung der Datenspeicherung voraus mit der Folge, daß durch die notwendige Beschränkung auf die für den Sortiervorgang bestimmenden Daten der einzelnen Datenfolgen große Teile der assoziativen Oberfläche nicht genutzt werden.

Aufgabe der Erfindung ist es, die Leistungsfähigkeit der assoziativen Oberfläche von Hybrid-Assoziativspeichern bei Anwendung des durch die DE-PS 23 42 660 bekannten Sortierverfahrens zu steigern und die Voraussetzung für die Sortierung auch großer Datenmengen ohne Beschränkung der Länge der einzelnen Datenfolgen mit annehmbarem Zeitaufwand sowie für die Lösung vergleichbarer assoziativer Aufgaben z.B. suche nächstliegenden Wert oder Höchst- bzw. Mindestwert, zu schaffen. Diese Aufgabe wird im grundsätzlichen durch die kennzeichnenden Merkmale des Patentanspruches 1 gelöst.

Die Erfindung geht dabei von einer vertikalen Ausrichtung der Daten mit zeilenserieller, aber bitparalleler Prüfung durch die assoziative Oberfläche des Hybrid-Assoziativspeichers aus, so daß allein durch die Adressensteuerung eine Beschränkung auf die für die Sortierung bestimmenden Daten möglich ist. Die auf die Zeichenbreite der Daten beschränkte Arbeitsbreite der Verknüpfungseinheit stellt sicher, daß die assoziative Oberfläche weitgehend voll genutzt werden kann und deren Leistungsfähigkeit nur im Bereich der Schwankungen des Assoziationsbereiches für das Sortierbitmuster beeinträchtigt werden kann. Allerdings sind besondere Vorkehrungen zu treffen, damit auch bei Ausweitung des Sortierbitmuster über eine Zeichenbreite hinaus einwandfreie Ergebnisse erzielt werden. Dazu dient einerseits die Zwischenspeicherung vollständiger Zeichen oder Bytes des Sortierbitmusters und andererseits die Herstellung von Trefferkettungen für aufeinanderfolgende Datenzeichen eines Datums, sowie die Überwachung der Kettungsbedingungen, die ohne Zusatzmaßnahmen immer erst wieder hergestellt werden müssen.

Eine Weiterbildung der Erfindung sieht daher die Verwendung individueller Kettungselemente je Datum der zu prüfenden Datei vor, so daß die Kettungsbedingung im Rahmen einer Erweiterung des Sortierbitmusters nicht immer erst wieder ermittelt werden muß.

Abhängig von der Art der Kettungselemente und deren Aussage kann gemäß einer Weiterbildung der Erfindung auch der Zeitaufwand für die Ermittlung der Kettungsbedingungen beim Unterschreiten von Bytegrenzen im Rahmen einer Einengung des Sortierbitmusters in unterschiedlicher Weise herabgesetzt werden.

Unabhängig davon läßt sich der Zeitaufwand für die einzelnen Suchläufe durch Prüfung aller Daten mit einem vorgegebenen Sortierbitmuster durch zusätzliche Maßnahmen gemäß einer anderen Weiterbildung der Erfindung in unterschiedlicher Weise beeinflussen. Diese Maßnahmen bestehen u.a. in einer gleichzeitigen Prüfung mehrerer Daten durch eigene Verknüpfungseinheiten der assoziativen Oberfläche, im Abbruch eines Suchlaufes nach Auftreten eines zweiten Treffers oder Mehrfachtreffers, der sowieso einen weiteren Suchlauf mit Ausweitung des Sortierbitmusters erfordert, oder in der Markierung von durch Treffer gekennzeichneten Daten und Wertung von Treffern lediglich von markierten Daten

0143148

83 P 1713 E

im folgenden Suchlauf bzw. Beschränkung des folgenden Suchlaufs lediglich auf die markierten Daten. Eine andere Maßnahme besteht in der Verwendung eines assoziativen Hilfsspeichers, der zweckmäßig in dem Basisspeicher des Hybrid-Assoziativspeichers integriert ist und der die bei einem Suchlauf durch Treffer gekennzeichneten Daten übernimmt, und in einem auf diese Daten beschränkten anschließenden Sortiervorgang durch die assoziative Oberfläche.

Abhängig von der Art und vom Umfang der vom Hybrid-Assoziativspeicher ausführbaren assoziativen Funktionen kann dabei die Prüfung der einzelnen Daten bzw. Datenzeichen anhand des zur Verfügung stehenden Sortierbitmusters auf verschiedene Art durchgeführt werden: Es wird die Gleichheit zwischen dem Sortierbitmuster und den entsprechenden Datenbits geprüft, wobei die nicht relevanten Bitstellen der für die Ausführung der Assoziationsfunktion zur Verfügung stehenden Arbeitsbreite durch eine Maske abgedeckt und daher beim Vergleich nicht berücksichtigt werden, oder aber man verzichtet auf die Maskensteuerung für die Festlegung des jweiligen Assoziationsbereiches im Bereich der Arbeitsbreite und wertet die assoziative Aussage "KLEINER/GLEICH" beim Vorwärts- oder Aufwärtssortieren bzw. "GROESSER/GLEICH" beim Rückwärts- oder Abwärtssortieren über die gesamte Arbeitsbreite, wobei das jeweilige Sortierbitmuster für den Rest der zur Verfügung stehenden Arbeitsbreite durch lauter "1" bzw. "0" aufgefüllt wird.

Auch erlaubt das Verfahren gemäß der Erfindung in sehr einfacher Weise Varianten zum Aufsuchen von Einzeldaten bzw. einer vorgegebenen Anzahl von Daten mit zu einem vorgegebenen Wert am nächsten liegenden Wert, oder zum Aufsuchen von Daten mit dem höchsten oder dem niedrigsten Wert bzw. den m höchsten oder niedrigsten Werten innerhalb einer Datenmenge.

Besondere Vorteile ergeben sich zudem bei Verwendung eines Hybrid-Assoziativspeichers, dessen Basisspeicher entsprechend der älteren deutschen Patentanmeldung P 33 11 665.2 ausgebildet ist, so daß dieser durch versetzte Einordnung von in Dateneinheiten zusammengefaßten Zeichen eines Datums sowohl die Ein- und Ausspeicherung einer ganzen Dateneinheit im zeilenweisen Zugriff als auch die gleichzeitige Bereitstellung einander entsprechender Zeichen aber verschiedener Daten für die Prüfung durch die assoziative Oberfläche ermöglicht. Neben der zeitsparenden Parallelprüfung mehrerer Daten ist damit auch eine Beschleunigung von Aus- oder Umspeicherungen gegeben, da diese ganze Dateneinheiten statt einzelne Zeichen betreffen.

Diese und weitere Einzelheiten gemäß der Erfindung ergeben sich im einzelnen aus den übrigen Patentansprüchen.

Nachfolgend sei die Erfindung von in der Zeichnung dargestellten Ausführungsbeispielen näher erläutert. Im einzelnen zeigen

FIG 1    das verwendete bekannte Änderungsschema für das Sortierbitmuster beim Suchen und Sortieren,

FIG 2    eine Tabelle für die Entwicklung des Sortierbitmusters beim Sortieren von drei vorgegebenen Daten entsprechend dem in FIG 1 gezeigten Ände-

rungsschema,

FIG 3A    ein Ablaufdiagramm für einen Sortiervorgang ent-
bis C     sprechend dem Grundprinzip der Erfindung,

FIG 4A    ein Ablaufdiagramm in Anlehnung an das von
bis B     FIG 3A  bis C  bei Verwendung von individuellen Kettungselementen je Datum der zu prüfenden
          Datei,

FIG 5     die Gegenüberstellung dreier Daten zur Erläuterung des Ungültigwerdens der in den individuel-
          len Kettungselementen enthaltenen Kettungsaussa-
          gen bei Unterschreiten einer Bytegrenze des Sortierbitmusters,

FIG 6     den prinzipiellen Aufbau einer Anordnung zur
          Durchführung des Verfahrens gemäß der Erfindung,

FIG 7     ein Prinzipschaltbild für die Kettungssteuerung
          bei Verwendung individueller Kettungselemente
          für eine 1-Bit-Aussage,

FIG 8     ein Prinzipschaltbild für die Kettungssteuerung
          bei Verwendung von Kennzahlen speichernden Kettungselementen,

FIG 9     den prinzipiellen Aufbau eines Hybrid-Assoziativspeichers für große Datenmengen mit den für
          die Ausführung des Sortierverfahrens gemäß der
          Erfindung benötigten Ergänzungen in Anlehnung
          an die Anordnung von FIG 6  und mit versetzter
          Einordnung der einzelnen Zeichen von aus mehreren Zeichen zusammengesetzten Dateneinheiten

zur Bildung vertikaler Zeichenfolgen entsprechend den verschiedenen Daten für die einzelnen Verknüpfungseinheiten der assoziativen Oberfläche gemäß einer besonderen Ausführungsform der Erfindung,

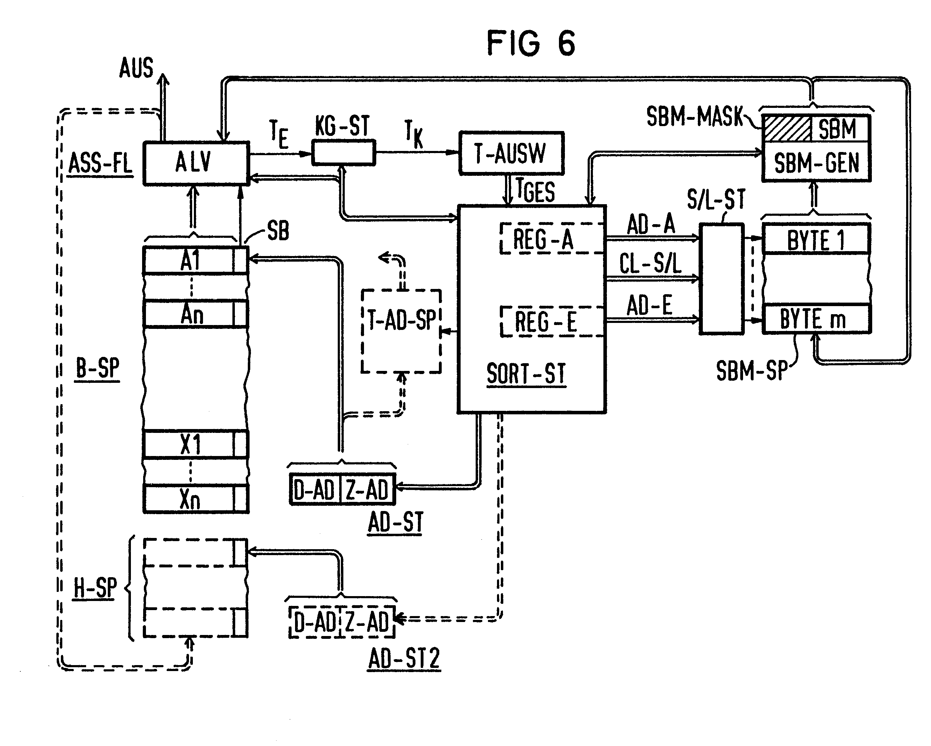

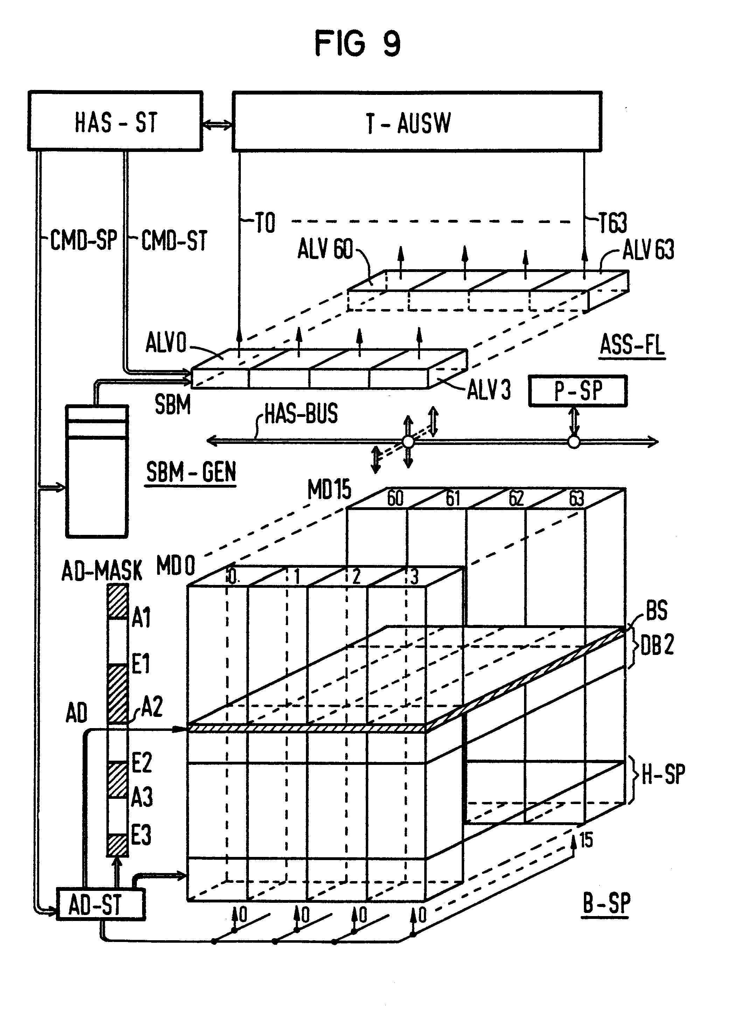

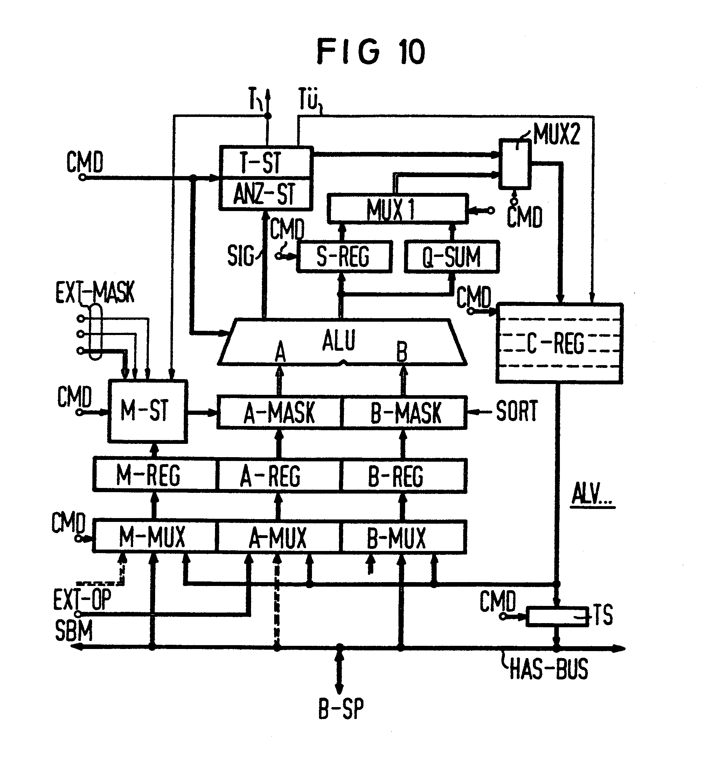

FIG 10   den Aufbau einer Verknüpfungseinheit als Baustein der assoziativen Oberfläche des Hybrid-Assoziativspeichers von FIG 6 oder FIG 9,

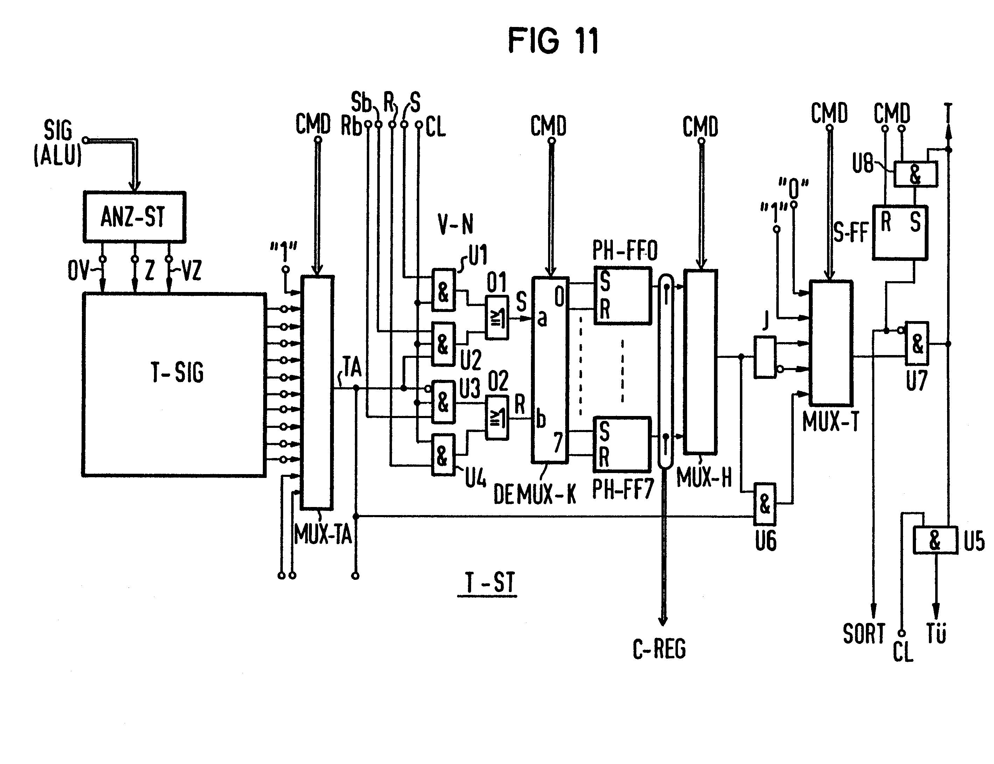

FIG 11   den Aufbau der Treffersteuerung in der Verknüpfungseinheit von FIG 10.

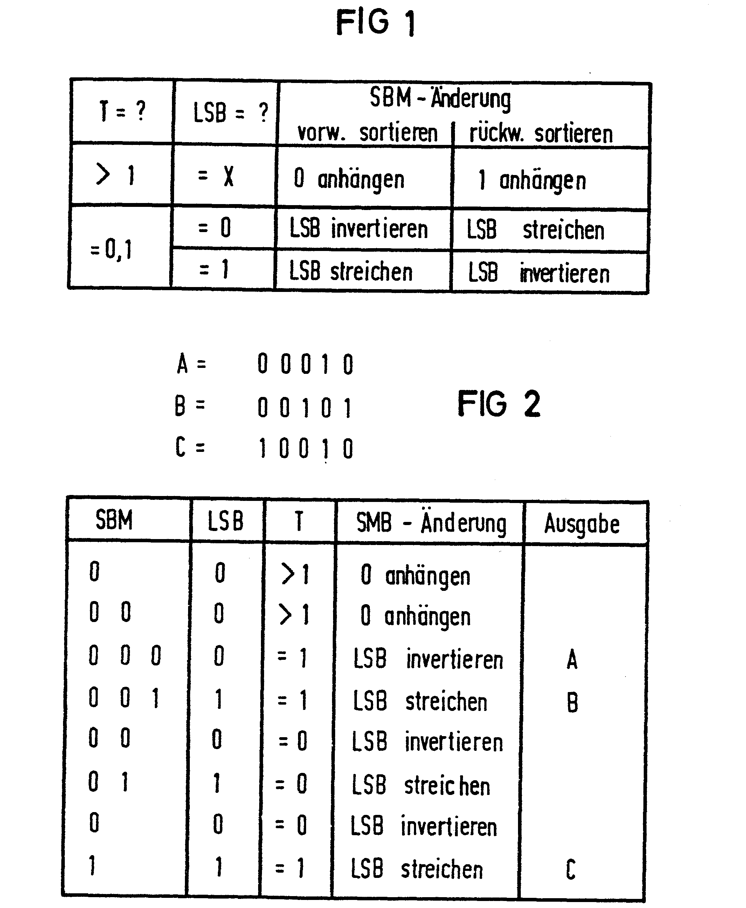

Wie bereits der DE-PS 23 42 660 oder der DE-OS 30 09 330 zu entnehmen ist, wird das jeweilige Sortierbitmuster in Form eines mehrstelligen Binärzeichens zur Verfügung gestellt und bitweise abhängig von der Anzahl der bei jedem Suchlauf ermittelten Treffer und des jeweils gültigen letzten signifikanten Bits entwickelt. FIG 1 zeigt den zugehörigen Sortieralgorithmus in Form einer Tabelle mit den drei Spalten "T = ?" für die Trefferanzahl, "LSB = ?" für das letzte signifikante Bit und "SBM-Änderung" für die Entwicklung des Sortierbitmusters SBM beim Vorwärts- und beim Rückwärtssortieren.

Insgesamt sind zwei Trefferfälle zu unterscheiden, nämlich mehr als ein Treffer und kein bzw. ein Treffer. Für den Fall, daß mehrere Treffer gleichzeitig vorliegen, ist das letzte signifikante Bit LSB ohne Bedeutung. In jedem Falle wird das zuletzt maßgebende Sortierbitmuster SBM durch Öffnen der Maske um eine weitere Bitstelle durch Anhängen einer 0 beim Vorwärtssortieren und durch Anhängen einer 1 beim Rückwärtssortieren erweitert. Bei den übrigen Trefferfällen, kein Treffer oder ein Treffer, ist zusätzlich das letzte signifikante Bit LSB  maßgebend. Ist dies eine 0, so wird diese beim Vorwärtssortieren durch Invertieren zu einer 1  oder beim Rückwärtssortieren durch Einengen der Maske einfach gestrichen. Ist das letzte signifikante Bit LSB  dagegen eine 1, so wird diese beim Vorwärtssortieren gestrichen oder aber beim Rückwärtssortieren durch Invertieren zu einer 0.

FIG 2  zeigt den Ablauf eines entsprechenden Sortiervorganges für drei Daten A, B  und C  in Form  einer Tabelle mit den Spalten "SBM" für das jeweils wirksame Sortierbitmuster, "LSB" für das letzte signifikante Bit, "T" für die Trefferanzeige, "SBM-Änderung" für die vorzunehmende Änderung des Sortierbitmusters SBM  und "Ausgabe" für die Ausgabe der Daten in sortierter Reihenfolgen.

Zu Beginn eines Sortiervorganges liefert der Sortierbitmuster-Generator in der Regel eine Folge von binären Nullen, und alle Bitstellen bis auf die höchstwertigste werden durch die Maske abgedeckt, um so möglichst schnell zu Treffern zu kommen. Bei den als Beispiel gewählten zu sortierenden drei Daten A, B  und C  führt ein derartiges Sortierbitmuster zu einer Mehrfachtrefferanzeige. Das Sortierbitmuster ist daher durch Anhängen einer 0  zu erweitern. Bei der nächsten Überprüfung wird gleichfalls ein Mehrfachtreffer angezeigt und durch Öffnen der Maske eine weitere 0  angehängt. Die dritte Prüfung zeigt einen einzigen Treffer an, und zwar für den Eintrag A, der ausgegeben werden kann. Nachfolgend wird die 0  an letzter Stelle invertiert und damit in eine 1  abgeändert, so daß bei der nächsten Prüfung wiederum ein Treffer erzielt wird und diesmal der Eintrag B  ausgegeben werden kann. Da das letzte signifikante Bit LSB  eine 1 war, wird durch Einengen der Maske eine Stelle wieder gestrichen. Die darauffolgende Prüfung ergibt keinen Treffer, und das letzte signifikante Bit wird in eine 1 abgewandelt. Da auch die nachfolgende Überprüfung keinen Treffer ergibt, wird wiederum durch Einengen der Maske das letzte wirksame Bit gestrichen, so daß das wirksame Sortierbitmuster SBM aus einer einzigen 0 an der höchsten Stelle besteht. Auch dabei führt die Prüfung zu keinem Treffer, wenn alle bereits aussortierten Daten als solche gekennzeichnet sind, so daß diese 0 zu einer 1 invertiert wird, was dann zu einem Treffer für den letzen Eintrag C führt.

Das gezeigte Beispiel behandelt einen sehr einfach ablaufenden Sortiervorgang, bei dem das Sortierbitmuster SBM nur einmal über mehrere Bitstellen ausgeweitet und dann wieder eingeengt wird. In der Praxis ist dagegen mit einem ständigen Wechsel zwischen Erweiterung und Einengung des Sortierbitmusers SBM in unterschiedlichem Ausmaße zu rechnen.

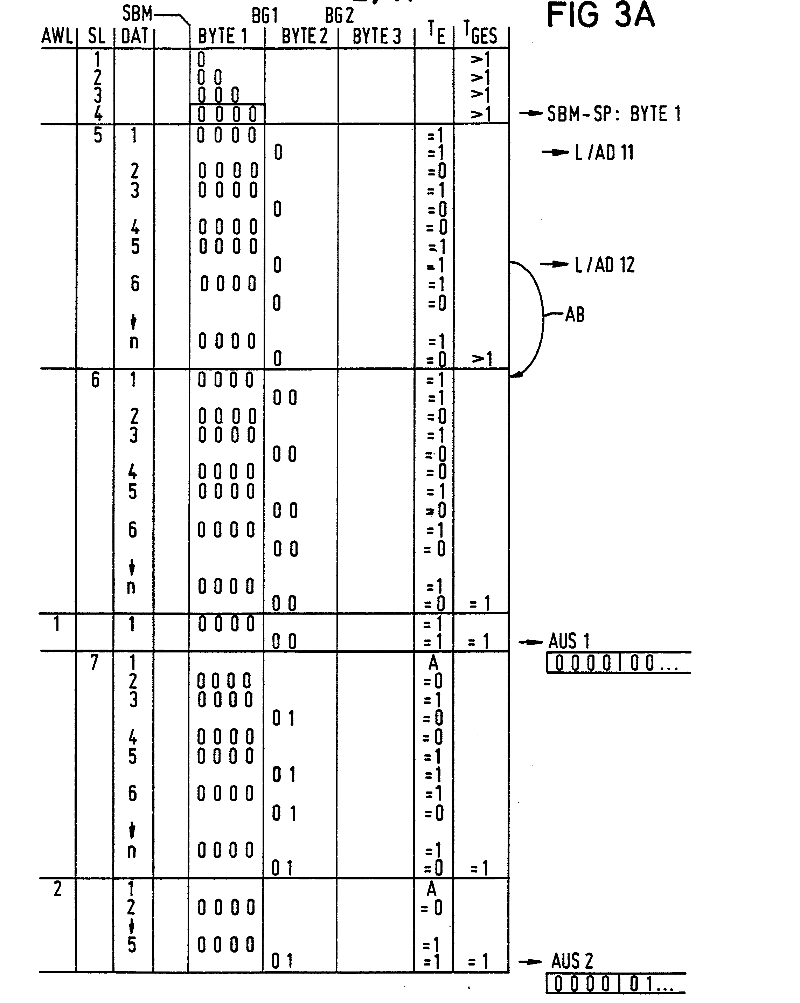

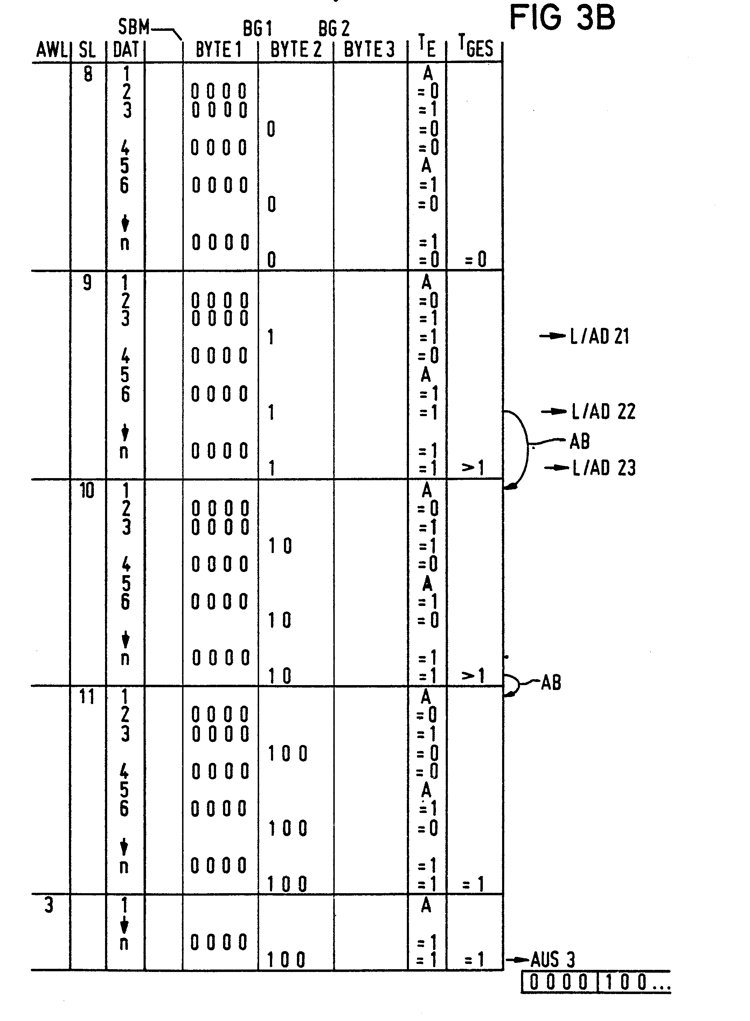

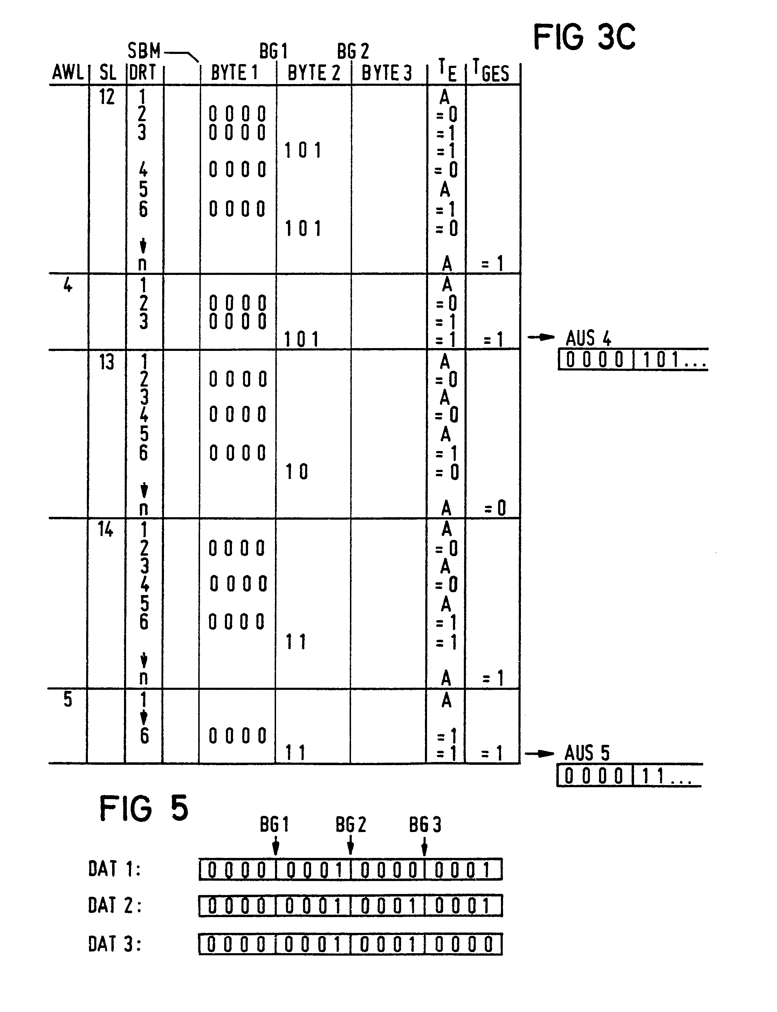

Das Ablaufdiagramm von FIG 3A bis C zeigt den Ablauf eines Sortiervorgangs entsprechend dem Verfahren gemäß der Erfindung bei vertikal gespeicherten Zeichenfolgen eines Datums. Im Kopf der FIG 3A ist oberhalb des eigentlichen Ablaufdiagramms das Suchbitmusterfeld dargestellt, wobei der Einfachheit halber jeweils vier Bit ein Byte bilden. Vollständige, durch eine Bytegrenze getrennte Bytes sind gesondert abgespeichert, und jeweils nur das an die letzte gültige Bytegrenze, z.B. BG1, anschließende zum Teil unvollständige Byte bestimmt den Fortgang des Sortiervorganges.

Das Ablaufdiagramm gliedert sich in sechs Spalten, nämlich eine für die Kennzeichnung der Auswahlläufe AWL zum Aufsuchen eines durch einen Einzeltreffer gekennzeichneten Datums, eine für die Suchläufe SL zum Aufspüren von Treffern, eine für das verwendete Suchbitmuster SBM, eine für Zeicheneinzeltreffer $T_E$ und eine für die gesamte Trefferanzahl $T_{GES}$ je Such- oder Auswahllauf SL oder AWL.

Im ersten Suchlauf SL1 besteht das Sortierbitmuster aus einer 0 in der höchstwertigsten Bitstelle und bei der Überprüfung der jeweils ersten Zeichen aller Daten ergeben sich mehrere Treffer. Das gleiche gilt für die Suchläufe 2 bis 4. Am Ende des Suchlaufes SL4 muß daher die Bytegrenze BG1 des Sortierbitmusters SBM überschritten werden. Das Byte BYTE 1 ist damit vollständig und muß zwischengespeichert werden, während das zweite Byte BYTE 2 als neues aktuelles Byte weiterzuentwickeln ist.

Bevor aber eine Prüfung anhand des aktuellen Bytes des Sortierbitmusters SBM und dem zugehörigen zweiten Zeichen aller Daten durchgeführt werden kann, muß jeweils das erste Zeichen eines jeden Datums mit dem abgespeicherten ersten Byte des Sortierbitmusters überprüft werden, und nur wenn dabei ein Treffer erzielt wird, ist eine anschließende Prüfung des zweiten Zeichens desselben Datums mit dem aktuellen Byte des Sortierbitmusters sinnvoll, da nur dann eine Übereinstimmung mit dem gesamten bisher entwickelten Sortierbitmuster SBM gegeben sein kann. Im fünften Suchlauf SL5 ist daher dieser Ablauf für jedes in der Spalte DAT verzeichnete Datum 1 bis n der Datei angegeben. Für die Daten DAT 1 und 5 ist diese Voraussetzung erfüllt. Am Ende des Suchlaufes SL5 ergibt sich daher eine Mehrfachtrefferanzeige. Das aktuelle Byte des Sortierbitmusters SBM ist also mit
einer weiteren 0 auf die zweite Stelle im zweiten Byte
BYTE2 zu erweitern und bestimmt den Suchlauf SL6, der
im übrigen in gleicher Weise wie der Suchlauf SL5 abläuft. Am Ende wird ein Einzeltreffer angezeigt, so
daß mit unverändertem Sortierbitmuster in einem ersten
Auswahllauf AWL1 das auszusortierende Datum DAT 1 ermittelt und als erstes ausgegeben werden kann, was am
rechten Rand des Ablaufdiagramms in FIG 3A mit AUS1
gekennzeichnet ist.

In analoger Weise wird nun das Sortierverfahren wie angegeben fortgeführt, was im Ablaufdiagramm nur bis einschließlich des fünften Auswahllaufes AWL5 dargestellt
ist.

Das gewählte Beispiel von FIG 3A bis C beschränkt sich
lediglich auf die Überschreitung einer Bytegrenze BG1 des
Sortierbitmusters SBM. Jedoch dürfte klar sein, daß bei
einer noch stärkeren Ausweitung des Sortierbitmusters über
mehrere Bytegrenzen hinweg bei jedem Such- und Auswahllauf für jedes Datum alle abgespeicherten vollständigen
Bytes des Sortierbitmusters SBM zur Prüfung vor Prüfung mit dem jeweils aktuellen Byte des Sortierbitmusters herangezogen werden müssen, um zu ermitteln, ob
die erforderliche Kettungsbedingung bis zur dem aktuellen Byte vorausgehenden Bytegrenze erfüllt ist. Mit zunehmender Ausweitung des Sortierbitmusters über eine
Byteweite hinaus, steigt also die Anzahl der zusätzlichen Prüfungen je Suchlauf entsprechend an, und die
Suchläufe erfordern zunehmend mehr Zeitaufwand, da für
jede Prüfung ein Lesevorgang im Basisspeicher erforderlich ist.

Dieser Zeitaufwand läßt sich nun auf verschiedene Arten verringern:
Eine dieser Maßnahmen besteht im sofortigen Abbruch des
jeweiligen Suchlaufes, wenn ein zweiter Treffer anfällt,
denn dann ergibt sich eine Mehrfachtrefferanzeige und
es wird sowieso ein neuer Suchlauf mit erweitertem Sortierbitmuster erforderlich. Im Ablaufdiagramm von FIG 3A
bis C  ist das durch die Sprungpfeile AB  am rechten
Rand des Ablaufdiagramms angedeutet.

Eine andere Maßnahme besteht darin, statt eines Abbruches des Suchlaufes nach einem zweiten Treffer die
während eines Suchlaufes durch Treffer gekennzeichneten Daten zu markieren oder die Adressen dieser Daten
in einem gesonderten Speicher festzuhalten. Dadurch werden in einem Suchlauf jeweils alle relevanten Daten erfaßt und in den nachfolgenden Suchläufen brauchen nur
noch diese Daten berücksichtigt zu werden. Unnötige
Prüfungen entfallen dadurch, jedoch müssen auch im
ersten Falle alle Daten im Basisspeicher angesteuert
werden. Im anderen Falle können die Daten anhand der
zwischengespeicherten Adressen jeweis direkt aufgesucht werden.

In gleicher Weise wie die Adressenzwischenspeicherung
wirkt bei einem Hybrid-Assoziativspeicher mit einer
einzigen Zeichensäule für die Daten auch ein gesonderter assoziativer Hilfsspeicher, der zweckmäßig als Teil
des Basisspeichers in diesen integriert ist und damit
die vorhandene assoziative Oberfläche nutzen kann, wenn
alle während eines Suchlaufes durch Treffer gekennzeichneten Daten in diesen Hilfsspeicher übernommen und anschließend aus diesem heraus endsortiert werden.

Da für diesen Hilfsspeicher in der Regel nur eine begrenzte Speicherkapazität vorgesehen werden kann, die einer vorgegebenen höchsten Trefferanzahl während eines
Suchlaufes entspricht, wird in einem oder mehreren Suchläufen zunächst ein Sortierbitmuster ermittelt, das eine
den Hilfsspeicher günstig füllende Anzahl von Treffern
bewirkt. Erst dann werden in einem anschließenden gesonderten Übernahmelauf mit unverändertem Sortierbitmuster
die durch Treffer gekennzeichneten Daten in den Hilfsspeicher übernommen. Eine Überfüllung des Hilfsspeichers
ist auf diese Weise trotz der beschränkten Speicherkapazität von vornherein ausgeschlossen.

Unabhängig von all diesen Maßnahmen zur Verminderung des
Zeitaufwandes für einen Sortiervorgang lassen sich die
zusätzlichen Prüfungen zur Feststellung der Kettungsbedingung für jedes Datum der zu überprüfenden Datei
grundsätzlich zu einem großen Teil vermeiden, wenn für
jedes Datum ein zusätzliches Kettungselement aufgewandt
wird, das bei Ausweitung des Sortierbitmusters über eine
Byteweite hinaus eine Aussage über die Einhaltung oder
Nichteinhaltung der Kettungsbedingung bis zur jeweils
gültigen Bytegrenze des Sortierbitmusters ermöglicht,
auf die daher ohne zusätzliche Prüfung zurückgegriffen
werden kann.

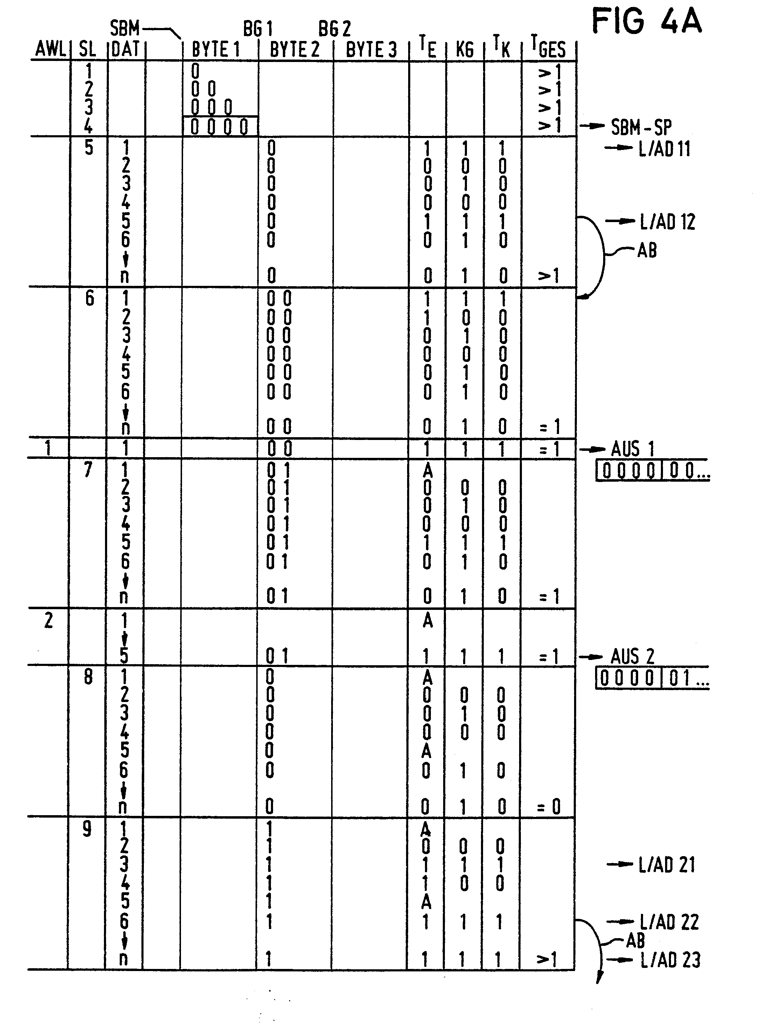

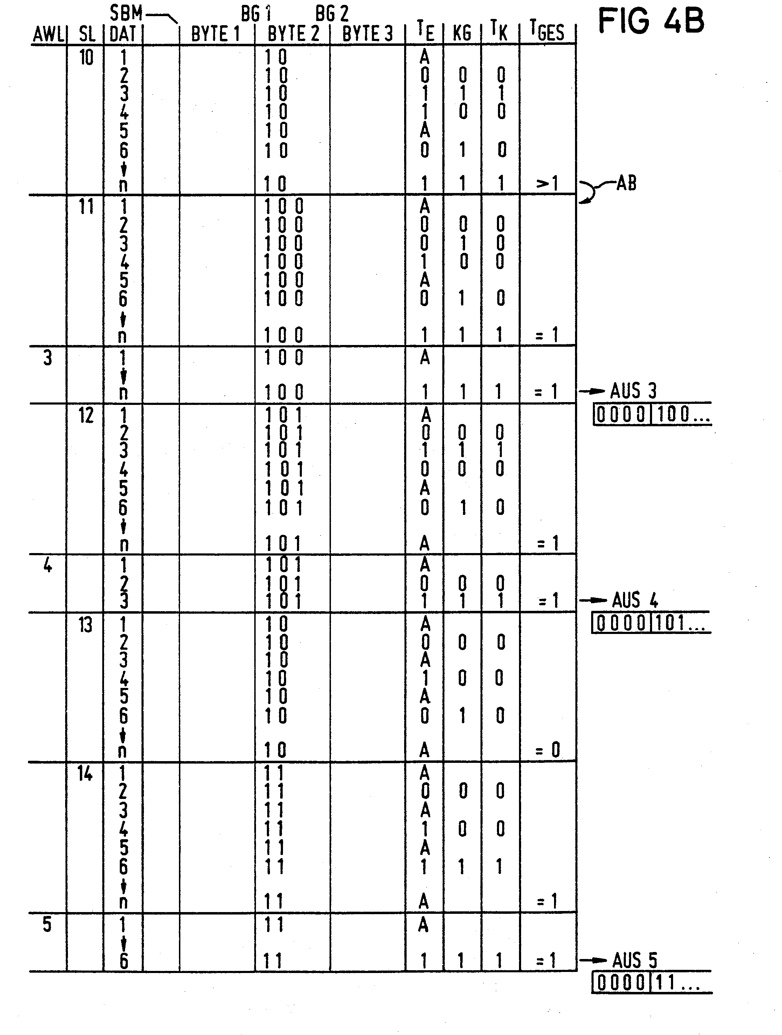

Das in FIG 4A bis B in Anlehnung an das von FIG 3A
bis C dargestellte Ablaufdiagramm zeigt den bereits
erläuterten Sortierablauf unter Berücksichtigung von
individuellen Kettungsgliedern, die in einer zusätzlichen Spalte "KG" berücksichtigt sind. Außerdem ist
das Ablaufdiagramm durch eine weitere Spalte "$T_K$" ergänzt, in der der aus der Koinzidenz von Einzeltreffer
$T_E$ und erfüllter Kettungsbedingung KG = 1 resultierende Treffer $T_K$ vermerkt ist, der anstelle des
Einzeltreffers $T_E$ zu werten ist.

In allen dargestellten Suchläufen SL5 bis 14 und den
Auswahlläufen AWL1 bis 5 entfallen daher die zusätzlichen Prüfungen für die Ermittlung der Kettungsbedingung
gegenüber dem Ablaufdiagramm von FIG 3A bis C bei der
Erweiterung des Sortierbitmusters. Der Sortiervorgang
wird dadurch grundsätzlich beschleunigt, wie auch die
Gegenüberstellung beider Ablaufdiagramme zeigt.

Das Ausmaß der Zeitaufwandsminderung ist auch in diesem
Falle von einigen Randbedingungen abhängig:
So behält z.B. die Kettungsaussage in den individuellen
Kettungslementen KG nur dann ihre Gültigkeit, solange
nicht eine Bytegrenze in Rückwärtsrichtung im Rahmen
einer Einengung des Sortierbitmusters überschritten
wird. Dies sei anhand von FiG 5 verdeutlicht, die drei
verschiedene Daten DAT1 bis DAT3 einer Datei zeigt.
Jedes Datum besteht jeweils aus vier Zeichen mit den
eingezeichneten Bytegrenzen BG1, BG2 und BG3. Alle drei
Zeichen stimmen bis zur zweiten Bytegrenze BG2 überein.
Außerdem stimmen die Daten DAT2 und DAT3 bis zur
Bytegrenze BG3 überein. Wird die Bytegrenze BG3 im
Rahmen einer Erweiterung des Sortierbitmustes überschritten, dann ist eine positive Kettungsaussage nur
noch für das Datum DAT1 gegeben. Wird anschließend das
Sortierbitmuster wieder eingeengt und die Bytegrenze
BG3 unterschritten, dann sind die Daten DAT2 und DAT3
wieder in den laufenden Sortiervorgang einzubeziehen.
Eine gültige Kettungsaussage bezüglich der Bytegrenze
BG2 besteht aber für diese Daten nicht mehr, sie ist
daher neu zu ermitteln.

Bei jeder Unterschreitung einer Bytegrenze des Sortierbitmusters muß also trotz der individuellen Kettungselemente die Kettungsbedingung immer wieder neu ermittelt werden. Die zur Ermittlung der jeweils gültigen Kettungsbedingungen erforderlichen Prüfungen lassen sich also mit individuellen Kettungselementen nicht ganz umgehen. Der Zeitaufwand hierfür ist jedoch je nach Art der gewählten Kettungselemente und der Art der Kettungsaussage unterschiedlich.

Bei einer 1-Bit-Aussage, wie sie z.B. eine bistabile Kippstufe vermittelt, kann man nicht umhin, nach jeder Bytegrenzenunterschreitung wie bei dem anhand von FIG 3A bis C gezeigten Verfahrensablauf zunächst alle nicht aussortierten Daten der Datei anhand der zwischengespeicherten Bytes des Sortierbitmusters zeichenweise bis zur neuen gültigen niedrigeren Bytegrenze zu prüfen.

Bei einer komplexeren Aussage, die z.B. die die gültige Kettungsgrenze darstellende Bytegrenze des Sortierbitmusters unabhängig vom Grad der Ausweitung des Sortierbitmusters konkret angibt und einen mehrstelligen Speicherabschnitt, z.B. in Form eines Registers oder eines Zählers, erfordert, ist je Datum nur ein Prüfvorgang in Form eine Vergleichs unabhängig von der Anzahl der gespeicherten vollständigen Bytes des Sortierbitmusters erforderlich.

Stimmt nämlich die durch die Kettungsaussage bezeichnete Bytegrenze mit der unterschrittenen Bytegrenze überein, dann bestand die Kettungsbedingung bis zu dieser Bytegrenze und die Kettungsaussage ist der neuen niedrigeren Bytegrenze anzupassen, etwa durch Verringerung einer entsprechenden Kennzahl um eine 1. Ist bei dem Vergleich keine Gleichheit gegeben, dann war zwar die Kettung bis zur unterschrittenen Bytegrenze nicht gegeben, aber eine bis zur neuen niedrigeren Bytegrenze bestandene Kettung lebt bei einer entsprechenden Kettungsaussage wieder auf.

0143148

Da bei einer solchen komplexen Kettungsaussage kein unmittelbares Steuersignal für die Verknüpfung mit dem jeweils erzielten Treffersignal $T_E$ gegeben ist, muß das Kettungssignal KG nachgebildet werden, indem z.B. gleichzeitig mit der Prüfung des jeweiligen Datenzeichens mit dem aktuellen Byte des Sortierbitmusters ein Vergleich der individuellen Kettungsaussage mit der gemein gültigen Kettungsaussage durchgeführt wird und das gewonnene Ergebnissignal als Kettungssignal KG verwendet wird. Die dazu benötigten Vergleichsaussagen können - wie noch gezeigt werden wird - in einfacher Weise von den Adressenregistern abgeleitet und von der den Sortiervorgang überwachenden Steuerung bereitgestellt werden.

Im übrigen gelten für das anhand von FIG 4A bis B erläuterte Sortierverfahren mit individuellen Kettungselementen die im übrigen zu dem Ablaufdiagramm von FIG 3A bis C gegebenen Hinweise bezüglich Abbruch eines Suchlaufs bei auftretendem zweiten Treffer oder stattdessen Markierung der in einem Suchlauf durch Treffer gefundenen Daten bzw. bezüglich der Verwendung eines Hilfsspeichers, was in FIG 4A bis B am rechten Rand des Ablaufdiagramms in gleicher Weise durch die zusätzlichen Vermerke angedeutet ist.

FIG 6 zeigt schließlich eine entsprechende Anordnung zur Durchführung der bisher beschriebenen Verfahren gemäß der Erfindung unter Zugrundelegung eines Hybrid-Assoziativspeichers, wie er dem Prinzip nach beispielsweise aus der DE-AS 25 25 287 bekannt ist. Der Hybrid-Assoziativspeicher besteht in diesem Falle aus einer Verknüpfungseinheit ALV als assoziative Oberfläche ASS-FL und einem normalen Zugriffspeicher mit zeilenweisem Zugriff als Basisspeicher B-SP, der die Zeichen, z.B. A1 bis An, der einzelnen Daten A bis X einer Datei in vertikaler Ausrichtung untereinander gespeichert enthält. Die benötigten Zeichen der einzelnen Daten werden der Verknüpfungseinheit ALV nacheinander bitparallel zugeführt und von dieser einheitlich geprüft. die Verknüpfungseinheit ALV kann in einfachster Weise aus einer Vergleichseinrichtung je Bit bestehen, wobei die Ergebnisleitungen aller Vergleichseinrichtungen das Treffersignal bewirken. Mit der Trefferleitung $T_E$ der Verknüpfungseinheit ALV ist über eine für die Ausführung des Sortierverfahrens gemäß der Erfindung notwendige Kettungssteuerung KG-ST die Trefferauswertesteuerung T-AUSW gekoppelt, die in an sich bekannter Weise anhand der zugeführten Treffersignale während eines jeden Suchlaufes die Gesamtzahl der angefallenen Treffer ermittelt.

Weiterhin ist ein Sortierbitmustergenerator SBM-GEN mit Maske SBM-MASK vorgesehen, der das jeweils aktuelle Byte des Sortierbitmusters SBM bereitstellt, das zur Verknüpfungseinheit ALV geführt wird. Außerdem ist in Auswirkung der Erfindung ein zusätzlicher Speicher SBM-SP mit Schreib- und Lesesteuerung S/L-ST vorgesehen, in dem die höherwertigen vollständigen Bytes des Sortierbitmusters zwischengespeichert werden, die bei Bedarf dem Sortierbitmustergenerator SBM-GEN wieder zur Verfügung gestellt werden.

Die Arbeitsweise der genannten Baueinheiten wird durch eine gemeinsame Steuerung SORT-ST bestimmt und gesteuert, von der die benötigten Steuerbefehle und Adressen zeitgerecht bereitgestellt werden, wobei der Arbeitsablauf teilweise durch Rücksignale beeinflußt wird, so durch die Trefferbeurteilungen der Auswertesteuerung T-AUSW und je nach der vorgenommenen Arbeitsteilung zwischen Sortierbitmustergenerator SBM-GEN und Steuerung SORT-ST gegebenenfalls auch durch ein die Bytegrenzenüberschreitung kennzeichnendes Signal, wenn die Logik für den Sortieralgorithmus im Sortierbitmustergenerator SBM-GEN untergebracht ist.

Für die Ein- und Ausgabesteuerung des Sortierbitmusterspeichers SBM-SP sind vorzugsweise zwei Adressenregister vorgesehen, nämlich REG-A für die Bereitstellung der Ausgabeadresse AD-A sowie REG-E für die Bereitstellung der Eingabeadresse AD-E, die jeweils auf zwei verschiedene Speicherabschnitte des Sortierbitmusterspeichers SBM-SP hinweisen, nämlich auf den für das zuletzt eingespeicherte vollständige Byte und den für das nachfolgende, mit Überschreiten der nächsten Bytegrenze dann nicht mehr aktuelle Byte aus dem Sortierbitmustergenerator SBM-GEN, die durch die zusätzlichen Takte $CL_L$ bzw. $CL_S$ freigegeben werden. Auf diese Weise können die Inhalte dieser Register zugleich als Bezugswerte bei Verwendung von individuellen Kettungselementen mit Angaben der zuständigen Bytegrenze benutzt und der Kettungssteuerung KG-ST zur Verfügung gestellt werden.

Die Auswahl der einzelnen Daten im Basisspeicher B-SP erfolgt anhand der Adressensteuerung AD-ST, die eine zweiteilige Adresse zur Verfügung stellt, nämlich die Startadresse D-AD für jedes Datum und die Zeichenadresse Z-AD für die einzelnen Zeichen innerhalb eines Datums. Die Einstellung der Adressen erfolgt in an sich bekannter Weise durch die übergeordnete Steuerung SORT-ST, die zugleich auch die Steuerimpulse für das Lesen oder Schreiben liefert.

Je Datum oder auch Datenzeichen ist außerdem ein gesondertes Kennungsbit SB vorgesehen, das z.B. im gesetzten Zustand die bereits erfolgte Aussortierung anzeigt und entweder über die Verknüpfungseinheit ALV oder direkt an die Steuerung SORT-ST geleitet wird, um eine Umsteuerung auf das nachfolgende Datum zu bewirken. Diese Kennungsbit SB werden in an sich bekannter Weise beim Aussortieren eines Datums auf Veranlassung der Steuerung SORT-ST gesetzt, was aber nicht näher gezeigt ist.

Wie in FIG 6 des weiteren gestrichelt angedeutet ist, kann entweder ein zusätzlicher Speicher T-AD-SP für die Zwischenspeicherung der Adressen der während eines Suchlaufes durch Treffer gekennzeichneten Daten oder aber ein als Hilfsspeicher arbeitender zusätzlicher Teilbereich H-SP im Basisspeicher B-SP für die Zwischenspeicherung der während eines Suchlaufes durch Treffer gekennzeichneten Daten vorgesehen sein, was bereits in Verbindung mit FIG 3A bis C und FIG 4A bis C erläutert worden ist.

Für die Auswahl der einzelnen Speicherabschnitte im Hilfsspeicher H-SP ist zweckmäßig eine gesonderte Adressensteuerung AD-ST2 vorgesehen. Außerdem ist im Übernahmepfad zwischen der Verknüpfungseinheit ALV und dem Hilfsspeicherbereich H-SP ein Pufferspeicher erforderlich, da in der Regel eine der beiden Adressensteuerungen wirksam und entweder nur geschrieben oder nur gelesen werden kann.

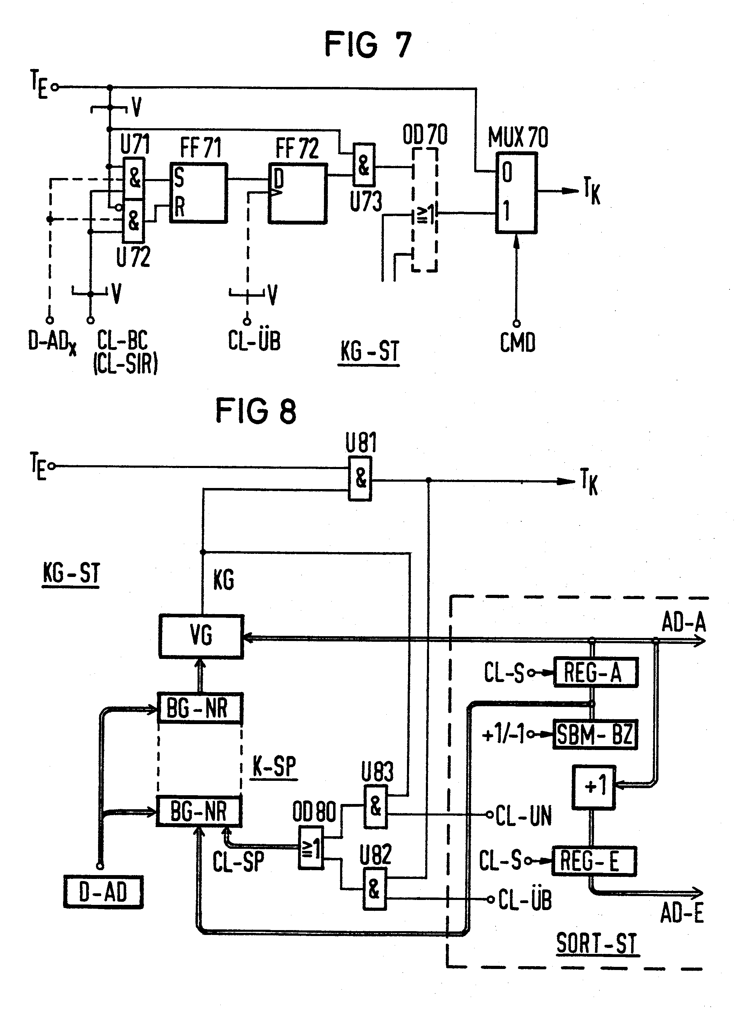

Der mögliche Aufbau der Kettungssteuerung KG-ST ist in FIG 7 und FIG 8 gezeigt. Bei dem Ausführungsbeispiel nach FIG 7 dient eine bistabile Kippstufe FF71 als Kettungselement, das abhängig vom Treffersignal $T_E$ der Verknüpfungseinheit ALV über die UND-Glieder U71 und U72  in Verbindung mit einem Übernahmetakt CL-BG  der
übergeordneten Steuerung SORT-ST jeweils bei Erreichen
der Bytegrenze gesetzt oder rückgesetzt wird. Ist die
Kippstufe FF71  gesetzt und damit die Kettungsbedingung bis zur gültigen Bytegrenze erfüllt, dann wird bei
jedem nachfolgenden durch das aktuelle Byte des Sortierbitmusters ausgelösten Treffer $T_E$  das UND-Glied U73
aufgesteuert, und das Treffersignal führt über den nach
Überschreiten der ersten Bytegrenze mit CMD  entsprechend eingestellten Auswahlschalter MUX70  zum geketteten Treffersignal $T_K$. Ist dagegen die erste Bytegrenze noch nicht überschritten, wird das Einzeltreffersignal $T_E$  über den Auswahlschalter MUX70  direkt weitergeleitet.

Der bisher beschriebene Teil der Kettungssteuerung KG-ST
erfordert zur Herstellung der Kettungsbedingung das vorherige Überprüfen aller betroffenen Zeichen eines Datums
anhand der zwischengespeicherten Bytes des Sortierbitmusters, was in Verbindung mit dem anhand von FIG 3A
bis C  erläuterten Verfahrensablauf bereits angesprochen
worden ist. Die innerhalb der Vielfachanschlüsse V  vorgesehenen Bauteile können in Verbindung mit dem zusätzlichen gestrichelt eingezeichneten ODER-Glied OD70  auch
vielfach, und zwar individuell für jedes Datum der Datei,
vorgesehen sein, wobei die Auswahl durch die gestrichelte, adressenbedingte Auswahlleitung $D\text{-}AD_x$  parallel zur
Auswahl des zugehörigen Datums im Basisspeicher B-SP
erfolgt.

Dabei besteht jedoch ein Problem: Ist das letzte Bit
vor der erreichten Bytegrenze eine 0, dann kann erst am
Ende des Suchlaufes festgestellt werden, ob die Bytegrenze tatsächlich überschritten wird, nämlich bei einem
Mehrfachtreffer, oder ob das letzte Bit in eine 1  abzuwandeln ist und damit die Bytegrenze noch nicht überschritten wird. Führt die O an letzter Stelle. zu einem
Rücksetzen der Kippstufe FF71, und würde danach die
Bytegrenze nicht überschritten, dann wäre die Kettungsaussage fälschlich geändert worden.

Diese Schwierigkeit kann umgangen werden, wenn man nach
Ausbleiben einer Bytegrenzenüberschreitung die Kettungsbedingung in einem gesonderten Durchlauf neu ermittelt.
Eine andere Möglichkeit bietet eine zweite, in FIG 7
gestrichelt eingezeichnete Kippstufe FF72, beispielsweise ein D-Flipflop, das mit einem aus der Koinzidenz
der Zustände "Bytegrenze erreicht" und "Mehrfachtreffer vorhanden" abgeleiteten Signal CL-ÜB getaktet wird
und den in der Kippstufe FF71 zunächst nur zwischengespeicherten Kettungszustand endgültig übernimmt. In diesem Falle muß aber der Takt CL-BG für die UND-Glieder
U71 und U72 durch einen bei jeder Prüfung ausgelösten
Takt CL-S/R ersetzt werden, so daß jedes Treffersignal
$T_E$ auf die Kippstufe FF71 einwirken kann. Anstelle der
Schaltungskombination mit den UND-Gliedern U71 und U72
sowie der Kippstufe FF71 als S/R-Flipflop kann auch
eine Schaltungskombination mit einem D-Flipflop verwendet werden.

Wie bereits in Verbindung mit FIG 5 erläutert, muß bei
jeder Bytegrenzenunterschreitung die Kettungsbedingung
für alle Kettungselemente erst neu ermittelt werden, was
dann Zeichen für Zeichen durchgeführt werden kann.

Der Aufwand hierfür läßt sich jedoch wesentlich verringern, wenn gemäß dem Ausführungsbeispiel von FIG 8 in
der Kettungssteuerung KG-ST als individuelles Kettungselement eine Speichereinheit z.B. eines besonderen Kettungsspeichers K-SP vorgesehen wird, das beispielsweise die Nummer BG-NR der die gültige Kettungsgrenze darstellenden Bytegrenze des Sortierbitmusters SBM gespeichert enthält.

Mit der Teiladresse D-AD wird bei jeder Prüfung eines Datenzeichens aus dem Basisspeicher B-SP die zugehörige Speichereinheit im Kettungsspeicher K-SP angesteuert, und die darin enthaltene Kettungsangabe BG-NR einem Vergleicher VG zugeführt und mit der im Adressenregister REG-A enthaltenen Adresse AD-A für das letzte zwischengespeicherte vollständige Byte des Sortierbitmusters SBM verglichen. Bei Übereinstimmung liefert der Vergleicher VG ein die Gültigkeit der Kettung anzeigendes Signal KG, das durch das UND-Glied U81 mit dem zugehörigen Treffersignal $T_E$ verknüpft wird und wie bei der Anordnung nach FIG 7 das gekettete Treffersignal $T_K$ liefert.

Wird eine Bytegrenze überschritten, was ebenfalls mit einem aus der Koinzidenz der Zustände "Bytegrenze erreicht" und "Mehrfachtreffer vorhanden" abgeleiteten Signal CL-ÜB der Sortiersteuerung SORT-ST angezeigt wird, dann sind alle Daten der zu prüfenden Datei in einem eingeschobenen Änderungslauf auf das Vorliegen der Kettungsbedingung bei unverändertem aktuellen Byte des Sortierbitmusters SBM zu überprüfen und der zugehörige Kettungseintrag BG-NR im Kettungsspeicher K-SP gegebenenfalls zu ändern, z.B. durch Erhöhen um eine 1 bei Zählung der überschrittenen Bytegrenzen.

Dazu wird zweckmäßig ein zentraler Bytezeiger SBM-BZ in der Sortiersteuerung SORT-St verwendet, dessen Anzeige normalerweise mit dem Inhalt des Adressenregisters REG-A übereinstimmt und um eine Einheit verringert oder erhöht werden kann.

Bei einer Bytegrenzenüberschreitung wird zunächst die im Register RE-A als Vergleichswert enthaltene Adresse AD-A beibehalten und der Bytezeiger SBM-BZ um eine Einheit erhöht, um die neue gültige Bytegrenze zu kennzeichnen. Ergibt die Überprüfung ein positives geketttes Treffersignal $T_K$, dann wird das UND-Glied U82 aufgesteuert und der neue Kettungseintrag mit dem am Ausgang des ODER-Glieds OD80 wirksam werdenden Schreibbefehl CL-SP vom Bytezeiger SBM-BZ übernommen. Erst am Ende des Änderungslaufes und nach Abspeicherung des vollständigen aktuellen Bytes des Sortierbitmusters SBM im Speicher SBM-SP wird dann auch mit dem Takt CL-S der Inhalt des Registers REG-A an den Inhalt des Zeigers SBM-BZ angepaßt und über ein Plus-1-Netzwerk +1 der Inhalt des Registers REG-E zur Kennzeichnung des Speicherplatzes für das neue aktuelle Byte des Sortierbitmusters SBM entsprechend geändert, bevor der eingeleitete Sortiervorgang fortgesetzt wird.

Bei jeder Unterschreitung einer Bytegrenze, die durch das Signal CL-UN der Sortiersteuerung SORT-ST angezeigt wird, lassen sich die neuen Kettungsbedingungen viel leichter als bei der Anordnung von FIG 7 ermitteln, da nur die Kettungseinträge BG-NR in den einzelnen Speicherabschnitten des Kettungsspeichers K-SP der Kettungssteuerung KG-ST zu überprüfen sind.

Als nächstes wird in diesem Fall der Zeiger SBM-BZ um eine Einheit erniedrigt, ohne den Inhalt des Registers REG-A zunächst zu ändern. Dann werden die einzelnen Einträge BG-NR im Kettungsspeicher K-SP nacheinander angesteuert, und wieder mit der im Register REG-A enthaltenen Vergleichsangabe AD-A verglichen. Bei Übereinstimmung steuert das Signal KG des Vergleichsers VG das UND-Glied U83 auf und veranlaßt über das ODER-Glied OD80 mit dem Signal CL-SP die Übernahme des Zeigerstandes als neuen Kettungseintrag in das jeweils angesteuerte Kettungselement im Kettungsspeicher K-SP. Besteht keine Übereinstimmung, bleibt der vorliegende Kettungseintrag unverändert, da dann keine gültige Kettung bis zur unterschrittenen Bytegrenze bestanden hat.

Nach Überprüfung aller Kettungseinträge im Kettungsspeicher K-SP wird dann mit der noch unveränderten Adresse AD-A im Register REG-A das letzte abgespeicherte Byte des Sortierbitmusters SBM dem Sortierbitmustergenerator SBM-GEN aus dem Speicher SBM-SP zur Verfügung gestellt, und erst anschließend werden die Inhalte der Register REG-A und REG-E dem neuen Stand des Zeigers SBM-BZ mit dem Takt CL-S angepaßt und der Sortiervorgang von der Sortiersteuerung SORT-ST fortgesetzt.

FIG 9  zeigt einen gegenüber der Anordnung von FIG 6
wesentlich komplexer aufgebauten Hybrid-Assoziativspeicher, dessen übergeordnete Steuerung mit HAS-ST
bezeichnet ist, wobei der benötigte Sortierbitmustergenerator SBM-GEN  zusammen mit der Maske und dem
Speicher für die vollständigen Sortierbitmuster-Bytes
der Einfachheit halber als eine Einheit dargestellt ist.

Der Basisspeicher ist vorzugsweise in Anlehnung an die
ältere deutsche Patentanmeldung P 33 11 665.2 ausgebildet. Er ist z.B. aus 16 Speichergruppen MD0 bis MD15
zusammengesetzt, von denen jede, z.B. MD0, mit jeweils
aus vier Zeichen oder Bytes bestehenden Dateneinheiten
zeilenweise zum Ein- oder Ausspeichern über das Datenleitungssystem HAS-BUS  ansteuerbar ist. Dateneinheiten
können also im direkten Zugriff zeilenweise wie bei
einem herkömmlichen Speicher wahlweise in eine der
Speichergruppen MD0  bis MD15  ein- oder ausgespeichert
werden. Daneben besteht insbesondere für den assoziativen Betrieb des Basisspeichers B-SP  die Möglichkeit,
aus jeder Speichergruppe gleichzeitig vier Zeichen, und
zwar die einander entsprechenden von jeweils vier verschiedenen Dateneinheiten je Speichergruppe, anzusteuern und der assoziativen Oberfläche ASS-FL  zuzuführen
oder von dieser zu übernehmen. Bei einem solchen Ansteuervorgang wird also in einem Zuge eine ganze Byte-
oder Zeichenscheibe BS  aus im vorliegenden Falle
4 x 16 = 64  Zeichen vom Basisspeicher B-SP  zur Verfügung gestellt oder von diesem übernommen. Entsprechend können die 64 Verknüpfungseinheiten ALV0  bis
ALV63  der assoziaiven Oberfläche ASS-FL  gleichzeitig tätig werden.

Diese Art der Zugriffsteuerung für den Basisspeicher
B-SP  ermöglicht andererseits, daß in jeder Zeichensäule, z.B. 0,  des Basisspeichers die aufeinanderfolgenden Zeichen einer Dateneinheit und Zeichen aufeinanderfolgender Dateneinheiten innerhalb einer Datenfolge derselben Verknüpfungseinheit, z.B. ALVO, der assoziativen Oberfläche ASS-FL  nacheinander zugeführt werden können, als wären die einzelnen Zeichen der Dateneinheiten vertikal untereinander und nicht horizontal nebeneinander, wenn auch zeilenmäßig versetzt, gespeichert. Datenfolgen werden daher in der Regel von derselben Ver- knüpfungseinheit der assoziativen Oberfläche verarbei- tet.

Eine solche Säulen- oder Stringbildung von Zeichen einer Datenfolge eröffnet verschiedene Möglichkeiten der Einordnung von aus vielen Dateneinheiten zusammengesetzten Dateien in den Basisspeicher B-SP, nämlich die Bildung einer Datei durch einen einzigen solchen String, so daß im vorliegenden Fall 64  verschiedene Dateien gleichzeitig durch die assoziative Oberfläche überprüft werden können oder aber die Verteilung einer Datei auf die parallelen Strings mit oder ohne Serienschaltung der Strings im Bereich des ganzen oder nur eines Teiles des Basisspeichers, so daß Teile der Datei parallel und damit die Daten als solche schneller überprüft werden können.

Im vorliegenden Falle ist von gerichteten Dateien auszugehen, wobei jeder Dateieintrag sich aus mehreren verschiedenen Daten zusammensetzt und eine vorgegebene Länge aufweist. Übertragen auf den vorgegebenen Aufbau des Basisspeichers B-SP  werden in einem Speicherbereich entsprechend den vorgegebenen 64 Zeichensäulen 64  Einträge der Datei abgespeichert und bilden einen Datenblock, z.B. DB2, wobei je nach Umfang der Datei eine Vielzahl solcher Datenblöcke wahlweise über den Basisspeicher B-SP verteilt eine Datei bilden können.

Um die auf diese Weise verstreut in einem Basisspeicher eingeordneten Datenblöcke leichter auffinden zu können, ist mit der Adressensteuerung AD-SP eine Adressenmaske AD-MASK für die Ansteueradressen AD gekoppelt, die z.B. durch die Anfangs- und Endadressen A... /E... des jeweiligen Datenblockbereiches über die Adressensteuerung AD-ST anhand von Steuerbefehlen CMD-SP der übergeordneten Steuerung HAS-ST des Hybrid-Assoziativspeichers eingestellt wird.

Gleichzeitig mit der Bereitstellung der Daten aus dem Basisspeicher B-SP werden die Verknüpfungseinheiten ALVO bis ALV63 der assoziativen Oberfläche ASS-FL von der übergeordneten Steuerung HAS-ST mit den notwendigen Steuerbefehlen CMD-ST versorgt, so daß die vom Basisspeicher zur Verfügung gestellten Zeichen individuell überprüft und verarbeitet werden können. Analoges gilt für die Bereitstellung der im vorliegenden Fall für einen Sortiervorgang benötigten Sortierbitmuster- und Maskeninformationen, die von der Sortierbitmustergeneratoreinheit SBM-GEN geliefert werden.

Wie auch bei der Anordnung nach FIG 6 ist in den Basisspeicher B-SP ein Hilfsspeicher H-SP integriert, dessen Speicherkapazität je vertikaler Speichersäule mindestens dem Umfang des größten Datums eines Dateieintrages entspricht, das für die Sortierung maßgebend ist, so daß durch die assoziative Oberfläche ASS-FL die Daten von 64 verschiedenen vorsortierten Dateieinträgen parallel überprüft und endsortiert werden können.

Zur Übernahme von im Rahmen eines Suchlaufes durch Treffer gekennzeichneter Daten aus dem Basisspeicher B-SP

0143148
83 P 1713 E

in den Hilfsspeicherbereich H-SP wird das jeweils gelesene Datum aus einem Datenblock, z.B. DB2, zunächst in einen an das Leitungssystem HAS-BUS angeschlossenen Pufferspeicher P-SP übernommen und anschließend in Zuordnung zu jeweils einem freien Säulenbereich in den Hilfsspeicher H-SP eingeschrieben. Unabhängig von der Lage des einzelnen Datums innerhalb der einzelnen Zeichensäulen 0 bis 63 werden immer freie Säulenbereiche im Hilfsspeicherbereich H-SP aufgefüllt.

Die Zuordnung des jeweils freien Säulenbereiches erfolgt gleichfalls durch die Adressensteuerung AD-ST in an sich bekannter Weise. Bei derartigen Umspeicherungen werden, wie auch im übrigen Verkehr mit dem Leitungssystem HAS-BUS, im vorliegenden Fall immer vier zu einer Dateneinheit zusammengefaßte Datenzeichen gleichzeitig transportiert. Selbstverständlich könnten bei n Speichersäulen je Speichergruppe, z.B. MD0, auch n Datenzeichen zu einer Dateneinheit zusammengefaßt sein.

Der Aufbau der einzelnen Verknüpfungseinrichtungen ALV ist in FIG 10 gezeigt und entspricht im wesentlichen dem in der älteren deutschen Patentanmeldung P 33 19 581.1 gezeigten Aufbau. Kernstück dieser Verknüpfungseinrichtungen ALV, aus der die assoziative Oberfläche ASS-FL zusammengesetzt ist, ist eine arithmetisch-logische Einheit ALU mit der Arbeitsbreite für ein Zeichen, also z.B. für acht Bit. Den beiden Operandeneingängen der ALU ist jeweils eine Maskiereinrichtung A-MASK bzw. B-MASK, ein Operandenregister A-REG bzw. B-REG und ein Auswahlschalter A-MUX bzw. B-MUX vorgeschaltet. Über letztere können die beiden Operandenregister aus den verschiedensten Quellen wahlweise geladen werden. Im vorliegenden Falle sei unterstellt, daß dem Register B-REG in den überwiegenden Anwendungsfällen Daten aus dem Basisspeicher B-SP des Hybrid-Assoziativspeichers zugeführt werden, die anhand eines im anderen Operandenregister A-REG zur Verfügung gestellten Suchargumentes SBM, das beispielsweise dem Sortierbitmuster entspricht, zu überprüfen sind. Anstelle des Argumentes SBM können dem Register A-REG auch externe Operanden EXT-OP für durchzuführende Verknüpfungsoperationen zugeführt werden. Ebenso können die Operandenregister auch vom Ergebnisregister C-REG der ALU, das zweckmäßig aus einem Registersatz von z.B. 16 Einzelregistern besteht, geladen werden. Analog zu den beiden Operandenregistern A-REG und B-REG ist auch noch ein gesondertes Maskenregister M-REG mit vorgeschaltetem Auswahlschalter M-MUX vorgesehen, das ebenfalls aus mehreren Quellen geladen werden kann, z.B. vom Ergebnisregister C-REG oder aber vom Datenleitungssystem HAS-BUS und gegebenenfalls auch von einer externen Quelle.

Mit dem Maskenregister M-REG ist des weiteren eine Maskensteuerung M-ST zur Einstellung der Operandenmasken A-MASK und B-MASK gekoppelt. Neben den Maskeninformationen aus dem Maskenregister M-REG können von dieser Steuerung auch direkt zugeführte externe Maskeninformationen EXT-MASK verarbeitet und vorliegende Treffersignale T berücksichtigt werden. Im vorliegenden Falle können beispielsweise die Maskeninformationen des Sortierbitmustergenerators SBM-GEN über diese Anschlüsse zugeführt werden. Die Arbeitsweise dieser Maskensteuerung M-ST ist ausführlich in der bereits genannten älteren deutschen Patentanmeldung P 33 19 581.1 erläutert.

Der Ausgang der Verknüpfungseinheit ALU ist parallel mit einem Schieberegister S-REG und einem Quersummenbildner Q-SUM verbunden. Die Anzeigensteuerung ANZ-ST dient zur Bildung der üblichen ALU-Anzeigen aus den Ergebnissignalen SIG der ALU. Mit dieser Anzeigensteuerung ist eine Treffersteuerung T-ST gekoppelt, die abhängig von den jeweils vorliegenden Anzeigen und der jeweils durchgeführten Assoziationsrelation ermittelt, ob ein Treffer erzielt worden ist oder nicht und wie das jeweilige Trefferergebnis zu werten ist.

Ergebnisse der Treffersteuerung T-ST können ebenso wie die Ergebnisse des Quersummenbildners Q-SUM oder der ALU bzw. des zwischengeschalteten Schieberegisters S-REG über Auswahlschalter MUX1 und MUX2 an das Ergebnisregister C-REG weitergeleitet werden, wobei die Übernahme in das Ergebnisregister gegebenenfalls vom Vorliegen eines Steuersignals $T_{\ddot{u}}$ der Treffersteuerung T-ST abhängig ist. Das Tätigwerden der einzelnen genannten Bauteile der Verknüpfungseinheit ALV und die Art ihres tätigwerdens wird - wie gezeigt - durch Steuersignale CMD der in FIG 9 enthaltenen übergeordneten Ablaufsteuerung HAS-ST festgelegt. Trotz der einheitlichen Kennzeichnung dieser Signale mit CMD dürfte klar sein, daß es sich hierbei um unterschiedliche Signale auf einer oder mehreren Signalleitungen handelt, um die einzelnen Bauteile ihrer Funktion entsprechend ansteuern zu können. Das gilt insbesondere im Hinblick auf die ALU, der mitzuteilen ist, welche Funktion jeweils ausgeführt werden soll.

Einzelheiten über den Aufbau der Treffersteuerung T-ST sind aus FIG 11 entnehmbar, die im linken oberen Teil die Anzeigensteuerung ANZ-ST zeigt. Diese Anzeigensteuerung ermittelt in an sich bekannter Weise aus den Signalen SIG der ALU die benötigten Anzeigen, aus denen dann in der Einrichtung T-SIG die den einzelnen Assoziationsrelationen entsprechenden Treffersignale gebildet werden, von denen mit dem Auswahlschalter MUX-TA
das jeweils zutreffende Treffersignal ausgewählt und als
Trefferanzeige TA  weitergeleitet wird.

Diese Trefferanzeige TA  wird nun nicht unmittelbar als
Treffer T  gewertet, sondern sie wird gegebenenfalls abhängig von dem jeweiligen Anwendungsfall entsprechenden
Randbedingungen modifiziert. Zu diesem Zweck ist ein
aus den UND-Gliedern U1  bis U4  und den ODER-Gliedern
O1  und O2  bestehendes Verknüpfungsnetzwerk vorgesehen,
das Setz- und Rücksetzbefehle S  bzw. R  für eine nachgeschaltete bistabile Kippstufe PH-FF  liefert. Im vorliegenden Fall ist entsprechend der Arbeitsbreite der
Verknüpfungseinheit je Bitstelle eine Kippstufe vorgesehen, insgesamt also die Kippstufen PH-FF0  bis
PH-FF7, von denen jeweils eine über den vorgeschalteten Auswahlschalter DEMUX-K  angesteuert wird. Mit
diesen Kippstufen können so in einfacher Weise bei der
Überprüfung von Datenfolgen mit einem aus mehreren
Zeichen bestehenden Argument entsprechende Teiltreffer
gekettet und daraus bei erfüllter Kettungsbedingung ein
Globaltreffer abgeleitet werden, wie er beispielsweise
auch bei der Durchführung von Sortiervorgängen benötigt wird.

Um in der Art der Modifikation und bezüglich der auszuführenden Kettungsfunktion möglichst frei zu sein,
können die Trefferkippstufen PH-FF...  durch das Verknüpfungsnetzwerk V-N  sowohl unbedingt als auch bedingt gesetzt oder zurückgesetzt werden, was durch die
Steuersignale S  und R  für die unbedingte Einstellung
und durch die Steuersignale $S_b$ und $R_b$  für die bedingte, d.h. für die von der jeweiligen Trefferanzeige TA
abhängige Einstellung, ermöglicht wird, die wie die übrigen Signale CMD  von der übergeordneten Steuerung geliefert werden. So kann z.B. im Rahmen einer Suchprozedur oder eines Sortiervorganges ein ausgewähltes Kettungsflipflop, z.B. PH-FF0, bedingt durch einen ersten Treffer gesetzt und durch Umschalten auf ein bedingtes Rücksetzen mit dem Steuersignal $R_b$  die Trefferkettung wirksam geschaltet werden, so daß das Kettungsflipflop solange gesetzt bleibt, bis die Kettungsfolge durch Ausbleiben eines Treffers unterbrochen wird.

Die von den Kettungskippstufen PH-FF0  bis PH-FF7  zur Verfügung gestellten Treffersignale sind durch einen nachgeschalteten Auswahlschalter MUX-H  wiederum einzeln auswählbar und können verschieden gewertet werden, indem z.B. ein Treffer als Nichttreffer oder aber als ein solcher gewertet wird. Die damit verbundene Invertierungsfunktion übernimmt das Inverterglied I. Auch kann unabhängig von dem tatsächlich erzeugten Treffersignal ein fest vorgegebenes Signal "0"  oder "1"  als Treffer gewertet werden. Die entsprechende Auswahl und Festlegung trifft letztendlich der Auswahlschalter MUX-T  abhängig von wirksamen Steuersignalen CMD, der das endgültige Treffersignal T  liefert, das in an sich bekannter Weise der die Treffersignale der assoziativen Oberfläche überwachenden Trefferauswertesteuerung T-AUSW  in FIG 9 zugeleitet wird.

Um im vorliegenden Falle mit einer derartigen Treffersteuerung auch die Bedingungen im Rahmen eines Sortiervorganges erfüllen zu können, ist die Trefferanzeige TA mit dem Ausgang des Auswahlschalter MUX-H  durch das UND-Glied U6  verknüpft,  dessen Ausgang an einen weiteren Eingang des Auswahlschalters MUX-T  herangeführt ist. Ein ausgewähltes Trefferflipflop, z.B. PH-FF0, kann daher als Bytegrenzen-Kettungsglied verwendet werden, wenn beispielsweise der den UND-Gliedern U1 bis U4 zugeführte Takt CL jeweils nur bei Erreichen der Bytegrenze eines Sortierbitmuster-Bytes ausgelöst wird.
Die Anordnung entspricht damit weitgehend der bereits
anhand von FIG 7 beschriebenen einen Variante für die
Kettungssteuerung K-ST, die damit unmittelbar in die
Verknüpfungseinheiten ALV integriert ist.

Die gezeigte Treffersteuerung T-ST läßt sich in einfacher Weise auch für das Sperren der zugehörigen Verknüpfungseinheit in Zusammenarbeit mit dem Hilfsspeicherbereich H-SP des Basisspeichers B-SP in FIG 9
verwenden, indem bei Vorliegen eines Einzeltreffers und
einem davon durch die übergeordnete Steuerung HAS-ST
abgeleiteten Steuersignal CMD über das UND-Glied U8
eine Kippstufe S-FF gesetzt wird, die das UND-Glied U7
am Ausgang des Auswahlschalters MUX-T sperrt. Die Treffersteuerung kann damit keine Treffersignale T mehr an
die übergeordnete Trefferauswertesteuerung T-AUSW liefern. Darüber hinaus kann das Ausgangssignal SORT der
Kippstufe S-FF unmittelbar als Sperrsignal den Maskiereinrichtungen A-MASK und B-MASK zugeführt werden, wie
in FIG 10 angedeutet ist, so daß durch eine generelle
Sperrung der beiden betroffenen Datenpfade durch die
nachgeschaltete ALU keine Daten mehr verarbeitet werden können. Durch eine derartige Blockade einer Verknüpfungseinheit ALV wird automatisch das im Hilfsspeicherbereich H-SP gespeicherte Datum im weiteren
Verlauf des Sortiervorganges nicht mehr berücksichtigt
und auf diese Weise als aussortiert markiert.

Selbstverständlich kann die Blockade einer Verknüpfungseinheit ALV auch auf anderem Wege erzielt werden, z.B.
über die Einstellung des Maskenregisters M-REG abhängig vom Ausgangssignal des UND-Gliedes U8 der Treffersteuerung T-ST in Verbindung mit der nachgeschalteten Maskensteuerung M-ST.

Mit dem anhand von FIG 9 bis FIG 11 vorangehend erläuterten Hybrid-Assoziativspeicher können, insbesondere
in Verbindung mit einer mikroprogrammgesteuerten Steuerung HAS-ST, auch sehr große Datenmengen mit verhältnismäßig günstigem Zeitaufwand entsprechend den Verfahren
der Erfindung sortiert werden. Ein Sortiervorgang hat
dann beispielsweise folgenden Ablauf:
Während der einzelnen Suchläufe wird die ermittelte
Treffergesamtzahl durch die Trefferauswertesteuerung
T-AUSW laufend überwacht. Übersteigt die Trefferzahl in
einem Suchlauf die Speicherkapazität des Hilfsspeichers
H-SP, also im vorliegenden Fall die Zahl 64, dann wird
der Suchlauf sofort abgebrochen und das gültige Sortierbitmuster erweitert, bis eine günstige Trefferanzahl
gefunden wird. Danach werden in einem Übernahmelauf mit
unverändertem Sortierbitmuster die durch die Treffer gekennzeichneten Dateieinträge nochmals ermittelt und
schrittweise in Form von Dateneinheiten erst in den
Pufferspeicher P-SP übernommen und von dort in Zuordnung zu einer freien Speichersäule im Hilfsspeicher H-SP
in diesen übertragen. Die jeweilige Adresse für den
durch einen Treffer gekennzeichneten Dateieintrag wird
dabei in an sich bekannter Weise anhand der das Treffersignal führenden Trefferleitung in Verbindung mit der
durch die Adressensteuerung AD-ST bereitgestellten Auswahladresse ermittelt.

Werden bei einer Prüfung gleichzeitig mehrere Treffer
durch die assoziative Oberfläche ASS-FL erzielt, dann
sorgt in an sich bekannter Weise eine mit der Trefferauswertesteuerung T-AUSW gekoppelte Prioritätssteuerung für eine zeitliche Auflösung beim Übertragen der gekennzeichneten Daten in den Hilfsspeicher H-SP.

Bei den einzelnen Suchläufen durch die relevanten Datenblockbereiche des Basisspeichers B-SP steht in den Verknüpfungseinheiten je Säule nur ein Kettungselement zur Verfügung. Nach Überschreiten der ersten Bytegrenze des Sortierbitmusters sind also die Kettungsbedingungen wie bereits erläutert jeweils neu herzustellen.

Bei der Endsortierung aus dem Hilfsspeicher H-SP steht dagegen für jeden Dateieintrag ein individuelles Kettungselement zur Verfügung, da je Speichersäule nur ein Dateieintrag übernommen wird. Der Endsortiervorgang kann daher entsprechend beschleunigt ablaufen, wobei ein Zeichenaustausch zur assoziativen Oberfläche ASS-FL hin jeweils nur bei Überschreitung einer Bytegrenze erforderlich wird. Bei einem Einzeltreffer wird dann der zugehörige Dateieintrag aus dem Hilfsspeicher H-SP ausgegeben und die zugehörige Verknüpfungseinheit ALV blockiert.

Werden dagegen in dem Hilfsspeicher H-SP nur die für den Sortiervorgang relevanten Teile eines Dateneintrags übernommen, dann muß bei jeder endgültigen Aussortierung der zugehörige Dateieintrag erst aus dem Basisspeicher B-SP herausgesucht werden, was zwar für den Hilfsspeicher H-SP Speicherkapazität einspart, aber wesentlich mehr Zeit erfordert.

Abhängig von der Art der zu sortierenden Einträge kann je Eintrag auch ein Zeichenabschnitt als individuelles Kettungselement vorgesehen werden. Das bedeutet je Prüfvorgang jedoch einen zusätzlichen Lese- und Schreibzugriff zum Basisspeicher B-SP und dürfte nur dann Vorteile bringen, wenn sehr viele ähnliche Daten mit vielen übereinstimmenden Datenzeichen zu sortieren sind. Die Inhalte der Kettungselemente würden dann durch die zugehörige Verknüpfungseinheit ALV mit Hilfe von eingeschobenen Elementaroperationen der Steuerung HAS-ST in der bereits erläuterten Weise verwaltet.

Bei den bisher erläuterten Ausführungsbeispielen wurde vorausgesetzt, daß gemäß der DE-PS 23 42 660 die für das Sortierbitmuster nicht relevanten Bitstellen im Rahmen der für die Ausführung von Assoziationsfunktionen vorhandenen Arbeitsbreite der Verknüpfungseinheit von z.B. acht Bit je Zeichen durch eine in gleicher Weise wie das Sortierbitmuster in der Breite sich ändernde Maske, z.B. SBM-MASK in FIG 6, von der jeweiligen Prüfung ausgeschaltet werden, so daß sich die Prüfung jeweils nur auf die vom Sortierbitmuster belegten Bitstellen beschränkt, und daß außerdem mit der Assoziationsfunktion "GLEICH" auf Gleichheit geprüft wird.

Dieses Ausschalten der nicht relevanten Bitstellen durch eine Maskeneinstellung kann jedoch entfallen, wenn man statt der Assoziationsfunktion "GLEICH" die Assoziationsfunktion "KLEINER/GLEICH" bzw. "GROESSER/GLEICH" verwendet, die nicht relevanten Bitstellen beim Sortierbitmuster alle auf "1" bzw. auf "0" setzt und die volle, nicht markierte Arbeitsbreite der Verknüpfungseinheit für die Prüfung verwendet.

Gegeben sei beispielsweise das folgende Sortierbitmuster
0 1 0 1 0 | X X X X
wobei mit X die nicht relevanten Bitstellen bezeichnet sind. Bei der Prüfung auf Gleichheit ergeben sich Treffer, die im Bereich zwischen den beiden folgenden Wer-

ten liegen:

01010 | 0000

und        01010 | 1111

Will man beispielsweise von der niedrigsten Rangfolge an Daten im Rang steigend also in Aufwärts- oder Vorwärtsrichtung, sortieren, dann kommt man zu demselben Ergebnis, wenn man die nicht relevanten Bitstellen alle auf "1" setzt und statt der Relation "GLEICHHEIT" die Relation "KLEINER/GLEICH" prüft. Analoges gilt für das Sortieren in umgekehrter Richtung, also in Abwärts- oder Rückwärtsrichtung, wobei jedoch alle nicht relevanten Bitstellen auf "0" zu setzen sind und die Relation "GROESSER/GLEICH" überprüft wird.

Dies bedeutet insbesondere bei Verwendung einer universell arbeitenden Verknüpfungseinrichtung für die Ausführung der Assoziationsfunktionen, wie sie beispielsweise anhand von FIG 10 beschrieben ist, keine Schwierigkeiten, vermeidet aber die sonst erforderliche Ausblendung der nicht relevanten Bitstellen bei der Prüfung, ohne daß das Sortierverfahren im übrigen dadurch beeinflußt wird.

Unabhängig von der Art der Prüfung läßt sich das Verfahren gemäß der Erfindung auch in einfacher Weise dazu nutzen, aus einer Datenmenge von Daten mit verschiedenem Wert oder Rang das Datum mit dem höchsten oder niedrigsten Wert auszusuchen. Wird das Datum mit dem niedrigsten Wert gesucht, dann wird ein Sortiervorgang in Vorwärtsrichtung beginnend mit dem Sortierbitmuster "00...00" durchgeführt, bis ein erster Sortiertreffer erzielt wird. Wird das Datum mit dem höchsten Wert gesucht, dann erfolgt der Sortiervorgang in Rückwärtsrichtung, beginnend mit dem Sortierbitmuster "11...11".

Bricht man dabei den Sortiervorgang nicht bereits nach dem ersten Sortiertreffer ab, sondern erst nach einer vorgegebenen Anzahl m von Sortiertreffern, dann erhält man zwangsläufig m Daten mit den m niedrigsten bzw. den m höchsten Werten, und zwar in geordneter Reihenfolge.

Auch ein Aufsuchen von Daten mit Werten, die einem vorgegebenen Bezugswert am nächsten liegen, ist mit dem Sortierverfahren gemäß der Erfindung in einfacher Weise möglich.

Werden dabei Daten gesucht, deren Werte entweder nur kleiner oder nur größer sind als der Bezugswert, dann werden in einem Ausscheidungslauf zunächst alle Daten der zu prüfenden Datenmenge mit dem Bezugswert als Sortierbitmuster überprüft und die Daten als aussortiert markiert, deren Werte größer bzw. kleiner als der Bezugswert sind. Will man den oder die am nächsten liegenden kleineren Werte erfassen, so erfolgt die Ausscheidung mit der Assoziationsfunktion "GROESSER ALS", im anderen Falle mit "KLEINER ALS". Für die danach verbleibenden Daten wird dann ein Sortiervorgang durchgeführt, wobei Ausgangspunkt für das Sortierbitmuster gleichfalls der vorgegebene Bezugswert ist. Bei der Suche nach kleineren Werten erfolgt die Sortierung in Abwärts- oder Rückwärtsrichtung, im anderen Falle in Aufwärts- oder Vorwärtsrichtung. Auch hierbei kann der Sortiervorgang jeweils nach dem ersten Sortiertreffer bereits abgebrochen werden, wenn nur das nächstliegende Datum gewünscht wird, oder aber erst nach m erzielten Sortiertreffern, wenn die m nächstliegenden Daten gesucht werden.

Sollen dagegen Daten mit dem nächstliegenden Wert bzw.

0143148

83 P 1713 0E

Werten unabhängig von der Richtung gesucht werden, so bietet sich in Verbindung mit einem Hilfsspeicher die Möglichkeit an, zwei Sortierläufe der vorbeschriebenen Art zur Ermittlung von Daten sowohl mit kleinerem als auch mit größerem Wert durchzuführen, die dabei gefundenen Daten in den Hilfsspeicher zu übernehmen und durch schrittweises Ändern des Sortierbitmusters abwechselnd in die eine und in die andere Richtung mit dem Bezugswert als Ausgangs-Sortierbitmuster zu prüfen, bis der erste oder die ersten m Sortiertreffer erzielt sind.

Das Verfahren gemäß der Erfindung ermöglicht also auch in einfacher Weise die Ausführung einer Vielzahl von assoziativen Aufgaben in Verbindung mit großen Datenmengen, die durch Globalbefehle der übergeordneten Steuerung HAS-ST zugewiesen und von dieser autonom dann ausgeführt werden.

11 Figuren

30 Patentansprüche

Patentansprüche

1. Verfahren zum Aufsuchen von in einem Hybrid-Assoziativspeicher gespeicherten Daten ausgerichteter Dateien abhängig von dem den einzelnen Daten zugeordneten Rang, z.B. zum Sortieren der Daten, unter Verwendung eines das jeweilige Sortierbitmuster (SBM) liefernden Generators (SBM-GEN), gegebenenfalls mit veränderbarer Maske (SBM-MASK) zur Festlegung des Assoziationsbereiches, und einer Trefferauswertesteuerung (T-AUSW), wobei das Sortierbitmuster (SBM) und gegebenenfalls die Maske (SBM-MASK) trefferabhängig bitweise erweiterbar oder einengbar ist, bis die Trefferauswertesteuerung (T-AUSW) nach Durchsuchen der gesamten zu prüfenden Datei im Basisspeicher (B-SP) das jeweils nächste aufgefundene Datum anzeigt, in Verbindung mit einer Einrichtung zur Kennzeichnung bereits aufgefundener Daten im Basisspeicher (B-SP), damit diese bei nachfolgenden Prüfungen nicht mehr berücksichtigt werden, d a d u r c h   g e - k e n n z e i c h n e t ,

- daß bei aus gleichgroßen Einheiten (z.B. Zeichen A1 bis An zu je 8 Bit) in beliebiger Kombination zusammengesetzten Daten, deren Einheiten einzeln aus dem Basisspeicher (B-SP) bitparallel einer assoziativen Verknüpfungseinheit (ALV) zusammen mit den für die Prüfung jeweils benötigten Parametern (z.B. Sortierbitmuster, gegebenenfalls mit Maske, Steueroperand) zugeführt werden, die ersten Zeichen (z.B. A1, B1 bis X1) eines jeden Datums bei innerhalb des ersten Byte des Sortierbitmusters (SBM) liegendem Ausgangspunkt für den Sortiervorgang nacheinander in an sich bekannter Weise anhand des gewählten Sortierbitmusters (SBM) in einem ersten Suchlauf überprüft werden,

- daß abhängig von der Trefferanzahl (= 0, = 1, >1) das Sortierbitmuster (SBM) und gegebenenfalls die Maske (SBM-MASK) für weitere Suchläufe in an sich bekannter

0143148

Weise bitweise eingeengt oder erweitert wird und dabei
gefundene Daten gegebenenfalls aussortiert werden,

- daß bei Erweiterung des Sortierbitmusters (SBM) über
die Bytegrenzen (z.B. BG1, BG2) hinaus bei jeder Bytegrenzenüberschreitung das jeweils zuletzt gültige vollständige Byte des Sortierbitmusters (SBM) zwischengespeichert wird,

- daß bei über die Bytegrenze (BG1) ausgeweitetem Sortierbitmuster (SBM) in jedem Suchlauf vor Überprüfung mit
dem jeweils aktuellen Byte des Sortierbitmusters (SBM)
alle möglicherweise vorangehenden Datenzeichen des jeweils zu prüfenden Datums anhand der zwischengespeicherten Bytes des Sortierbitmusters (SBM) nacheinander
überprüft werden und die Prüfung mit dem aktuellen
Byte des Sortierbitmusters (SBM) nur dann ausgeführt
wird, wenn die Kettungsbedingung für die abgespeicherten Bytes des Sortierbitmusters (SBM) für das
jeweils zu prüfende Datum erfüllt ist.


2. Verfahren nach Anspruch 1, d a d u r c h  g e -
k e n n z e i c h n e t , daß für jedes Datum der Datei ein individuell zugeordnetes Kettungselement (KG)
verwendet wird, das in Verbindung mit einer Kettungssteuerung (KG-ST) im Rahmen der Erweiterung des Sortierbitmusters (SBM) den jeweils bis zur letzten überschrittenen Bytegrenze (z.B. BG2) des Sortierbitmusters
(SBM) gegebenen, aber bei jeder Unterschreitung einer
Bytegrenze im Rahmen einer zwischenzeitlichen Einengung
des Sortierbitmusters (SBM) wieder ungültig werdenden
Kettungszustand anzeigt, daß bei einer Bytegrenzenüberschreitung im Rahmen der Erweiterung des Sortierbitmusters
(SBM) während der nachfolgenden Suchläufe Prüfungen
lediglich mit dem aktuellen Byte des Sortierbitmusters
(SBM) durchgeführt werden und sich ergebende Treffer
lediglich in Verbindung mit einer zugehörigen gültigen Kettungsanzeige gewertet werden, und daß bei Unterschreiten einer Bytegrenze (z.B. BG2) des Sortierbitmusters (SBM) zunächst für alle Daten die Kettungsanzeige für die neue Bytegrenze (z.B. BG1) in den individuellen Kettungselementen neu ermittelt wird und erst dann mit dem jeweils aktuellen Byte des Sortierbitmusters (SBM) die Suchläufe fortgesetzt werden.

3. Verfahren nach Anspruch 1 oder 2, d a d u r c h g e k e n n z e i c h n e t , daß als Kettungsanzeige lediglich eine 1-Bit-Aussage verwendet wird.

4. Verfahren nach Anspruch 2 und 3, d a d u r c h g e k e n n z e i c h n e t , daß zur Ermittlung der jeweils gültigen Kettungsanzeige die einander entsprechenden Datenzeichen (z.B. A1, B1 bis X1) der nicht bereits aussortierten Daten (A, B bis X) der Datei im Basisspeicher (B-SP) unmittelbar nacheinander anhand des gespeicherten zugehörigen Bytes (z.B. BYTE 1) des Sortierbitmusters (SBM) überprüft werden und dieser Vorgang wiederholt wird, bis alle gespeicherten Bytes des Sortierbitmusters (SBM) erfaßt sind.

5. Verfahren nach Anspruch 2, d a d u r c h g e - k e n n z e i c h n e t , daß als Kettungsanzeige eine Kennzahl der jeweils letzten gültigen Bytegrenze (z.B. BG2) verwendet wird, daß bei jeder Unterschreitung einer Bytegrenze (z.B. BG2) des Sortierbitmusters (SBM) zunächst die Kennzahlen aller nicht bereits aussortierten Daten der Datei im Basisspeicher (B-SP) mit der zwischengespeicherten Anzahl vollständiger Bytes des Sortierbitmusters (SBM) verglichen werden und bei Gleichheit die Kennzahl um eine Einheit verringert wird, während bei Ungleichheit die Kennzahl unverändert
bleibt,
und daß bei den nachfolgenden Suchläufen sich ergebende
Treffer lediglich in Verbindung mit einer die gültige
Bytegrenze zum aktuellen Byte des Sortierbitmusters
(SBM) anzeigenden Kennzahl gewertet werden.

6. Verfahren nach Anspruch 5, d a d u r c h   g e -
k e n n z e i c h n e t , daß die Kennzahl für die jeweils letzte gültige Bytegrenze (z.B. BG2) der einzelnen Daten und der jeweilige Vergleichswert für die
Bytekettung des Sortierbitmustes (SBM) von zentralen
Steuerregistern (z.B. Adressenregistern des Sortierbitmusterspeichers) abgeleitet werden.

7. Verfahren nach einem der Ansprüche 1 bis 6, d a -
d u r c h   g e k e n n z e i c h n e t , daß bei Auftreten eines zweiten Treffers innerhalb eines Suchlaufes mit dem jeweils aktuellen Byte des Sortierbitmusters
(SBM) dieser unmittelbar abgebrochen und das Sortierbitmuster erweitert wird.

8. Verfahren nach einem der Ansprüche 1 bis 6, d a -
d u r c h   g e k e n n z e i c h n e t , daß die während eines Suchlaufs zu Treffern führenden Daten markiert werden und daß bei mehreren während eines Suchlauf erzielten Treffern im nachfolgenden Suchlauf lediglich die von markierten Daten herrührenden Treffer berücksichtigt werden.

9. Verfahren nach Anspruch 8, d a d u r c h   g e -
k e n n z e i c h n e t , daß die markierten Daten anhand der Markierungen ermittelt und nur diese Daten
einer Prüfung unterzogen werden.

10. Verfahren nach Anspruch 8, d a d u r c h   g e -
k e n n z e i c h n e t , daß die Adressen (T-AD) der
zu Treffer führenden Daten gesondert zwischengespeichert
werden und daß während des bzw. der nachfolgenden Suchläufe die zu überprüfenden Daten anhand der zwischengespeicherten Adressen (T-AD) ermittelt und aussortiert
werden.

11. Verfahren nach einem der Ansprüche 1 bis 6, d a -
d u r c h   g e k e n n z e i c h n e t , daß die während eines Suchlaufes durch Treffer gekennzeichneten
Daten in einen assoziativen Hilfsspeicher (H-SP) übernommen und im Datenspeicher (z.B. B-SP) als aussortiert markiert werden, daß die in den Hilfsspeichern
(H-SP) übernommenen Daten jeweils in gleicher Weise
durch treffergesteuerte Einstellung von Sortierbitmuster (SBM) und gegebenenfalls Maske (SBM-MASK)
endsortiert und ausgegeben werden und daß jeweils danach
ein neuer Suchlauf für den Datenspeicher (B-SP) eingeleitet wird, bis alle gewünschten Daten aussortiert sind.

12. Verfahren nach Anspruch 11, d a d u r c h   g e -
k e n n z e i c h n e t , daß die während eines jeden
Suchlaufes insgesamt angefallene Anzahl von Treffern
ermittelt und auf die Einhaltung eines vorgegebenen
Größenberichs überwacht wird, daß durch schrittweise
erfolgendes Einstellen von Sortierbitmuster (SBM) und
gegebenenfalls Maske (SBM-MASK) aufgrund der jeweils
vorangehend ermittelten Trefferanzahl die Anzahl der bei
jedem neuen Suchlauf gewonnenen Treffer so beeinflußt
wird, daß diese mit dem vorgegebenen Größenbereich
übereinstimmt, und daß erst dann die während eines
nachfolgenden Suchläufs mit unverändertem Sortierbitmuster (SBM) zu einem Treffer führenden Daten in den
Hilfsspeicher (H-SP) übernommen werden.

13. Verfahren nach einem der Ansprüche 1 bis 6 in Verbindung mit Anspruch 7 oder 11 oder 12, d a d u r c h g e k e n n z e i c h n e t , daß jeweils für eine Gruppe von Daten einer Datei eine individuell zugeordnete Verknüpfungseinheit (ALV) mit gemeinsamer Trefferauswertesteuerung (T-AUSW) für alle Verknüpfungseinheiten (ALV) verwendet wird, daß den Verknüpfungseinheiten (ALV) die jeweils einander entsprechenden Datenzeichen der einander entsprechenden Daten aus allen Gruppen parallel zugeführt und von diesen gleichzeitig anhand eines für alle Verknüpfungseinheiten (ALV) einheitlich gültigen Sortierbitmusters (SBM) überprüft werden und daß während eines jeden Suchlaufs die benötigten Datenzeichen der jeweils eine Gruppe bildenden Daten den zugehörigen Verknüpfungseinheiten (ALV) nacheinander zugeführt werden.

14. Verfahren nach Anspruch 13 in Verbindung mit Anspruch 12, d a d u r c h g e k e n n z e i c h n e t , daß als Hilfsspeicher (H-SP) ein Bereich des Basisspeichers (B-SP) mit je einem Datum je Verknüpfungseinheit (ALV) verwendet wird.

15. Verfahren nach Anspruch 13 oder 14 mit jeweils einem Datum je Verknüpfungseinheit (ALV), d a d u r c h g e k e n n z e i c h n e t , daß ein Austausch der Datenzeichen zwischen Speicher (B-SP/H-SP) und den Verknüpfungseinheiten (ALV) lediglich bei Überschreiten einer Bytegrenze des Sortierbitmusters (SBM) erfolgt, daß jeder auf einen Prüfvorgang reduzierte Suchlauf bei einem Mehrfachtreffer abgebrochen und mit neuer Sortierbitmuster- und gegebenenfalls Maskeneinstellung wieder neu begonnen wird und daß infolge von Einzeltreffern ausgegebene Daten eine Sperrung der zugehörigen Verknüpfungseinheit (ALV) bewirken.

16. Verfahren nach einem der Ansprüche 1 bis 15, d a d u r c h   g e k e n n z e i c h n e t , daß statt der Assoziationsfunktion "GLEICH" mit Maskenabdeckung der nicht relevanten Bitstellen des Sortierbitmusters (SBM) die Assoziationsfunktion "KLEINER/ GLEICH" beim Vorwärts- oder Aufwärtssortieren bzw. "GROESSER/GLEICH" beim Rückwärts- oder Abwärtssortieren verwendet wird und daß bei einer vorgegebenen Arbeitsbreite zur Ausführung der einzelnen Assoziationsfunktionen durch die Verknüpfungseinheit (ALV) die für das Sortierbitmuster (SBM) nicht relevanten Bitstellen abhängig von der Sortierrichtung auf "1" bzw. "0" gesetzt werden.

17. Verfahren nach einem der Ansprüche 1 bis 16 zur Ermittlung von Einzeldaten oder einer vorgegebenen Anzahl von Daten aus einer Datenmenge mit dem Höchst- bzw. Mindestwert oder mit den höchsten bzw. niedrigsten Werten, d a d u r c h   g e k e n n z e i c h - n e t , daß ausgehend von einem die volle Arbeitsbreite zur Ausführung von Assoziationsfunktionen abdeckenden Sortierbitmuster (SBM) mit dem Ausgangswert "11...11" bzw. "00...00" der Sortiervorgang durchgeführt wird, bis ein erster oder die vorgegebene Anzahl von Sortiertreffern beim Sortieren in Rückwärts- bzw. Vorwärtsrichtung erzielt ist.

18. Verfahren nach einem der Ansprüche 1 bis 16 zur Ermittlung von Einzeldaten oder einer vorgegebenen Anzahl von Daten mit einem zu einem vorgegebenen Bezugswert am nächsten liegenden Wert, d a d u r c h g e k e n n z e i c h n e t , daß mit dem Bezugswert als Sortierbitmuster (SBM) in einem Ausscheidungslauf zunächst alle Daten der zu prüfenden Datenmenge überprüft und abhängig von der Bezugsrichtung (z.B. aufwärts bzw. abwärts) der zu ermittelnden Daten zum Bezugswert alle Daten als aussortiert gekennzeichnet werden, deren Wert kleiner bzw. größer ist als der Bezugswert, und daß erst anschließend ausgehend von dem Bezugswert als Sortierbitmuster (SBM) der Sortiervorgang anhand der nicht als aussortiert gekennzeichneten Daten durchgeführt wird, bis ein erster oder die vorgegebene Anzahl von Sortiertreffern beim Sortieren in Voraus- bzw. Rückwärtsrichtung erzielt ist.

19. Anordnung zur Durchführung des Verfahrens nach einem der Ansprüche 1 bis 18, g e k e n n z e i c h - n e t

- durch einen Hybrid-Assoziativspeicher, bestehend aus wenigstens einer Verknüpfungseinheit (ALV) als assoziative Oberfläche (ASS-FL), einem normalen Zugriffsspeicher als Basisspeicher (B-SP) und einer Ablaufsteuerung (SORT-ST/HAS-ST) zur Durchführung des Sortiervorganges und zur Bereitstellung der jeweils benötigten Parameter und Steuersignale einheitlich für alle Verknüpfungseinheiten (ALV) der assoziativen Oberfläche (ASS-FL),

- durch einen Sortierbitmuster-Generator (SBM-GEN) mit einem Speicher (SBM-SP) für die Zwischenspeicherung vollständiger Bytes des Sortierbitmusters (SBM) bei Erweiterung des Sortierbitmusters über eine Bytebreite hinaus,

- durch eine mit den Verknüpfungseinheiten (ALV) der assoziativen Oberfläche (ASS-FL) gekoppelten gemeinsamen Trefferauswertesteuerung (T-AUSW) zur Ermittlung der je Suchlauf angefallenen Trefferanzahl und Steuerung der Ablaufsteuerung und des Sortierbitmustergenerators mit Speicher (SBM-SP) und

- durch eine Kettungssteuerung (KG-ST) mit wenigstens einem Kettungselement in Verbindung mit jeder Verknüp-

0143148

fungseinheit (ALV) der assoziativen Oberfläche
(ASS-FL) zur Ermittlung der jeweils gültigen Kettungsbedingung.

20. Anordnung nach Anspruch 19, insbesondere zur Durchführung der Verfahren nach Anspruch 2 bis 6, g e k e n n -
z e i c h n e t  durch individuelle Kettungselemente je
Datum der zu prüfenden Datei und durch eine gemeinsame
Kettungssteuerung (KG-ST) je Verknüpfungseinheit (ALV).

21. Anordnung nach Anspruch 19 oder 20, d a d u r c h
g e k e n n z e i c h n e t , daß die Kettungssteuerung
(KG-ST) jeweils integraler Bestandteil der Verknüpfungseinheit (ALV) ist.

22. Anordnung nach Anspruch 21, d a d u r c h   g e -
k e n n z e i c h n e t , daß auch die Kettungselemente
integraler Bestandteil der Verknüpfungseinheiten (ALV)
sind.

23. Anordnung nach einem der Ansprüche 19 bis 22, insbesondere zur Durchführung des Verfahrens nach Anspruch 3,
d a d u r c h   g e k e n n z e i c h n e t , daß die
Kettungselemente aus einer bistabilen Kippstufe bestehen.

24. Anordnung nach einem der Ansprüche 20 bis 22, insbesondere zur Durchführung des Verfahrens nach Anspruch 5,
d a d u r c h   g e k e n n z e i c h n e t , daß die
Kettungselemente aus einem Speicher (z.B. Register oder
Zähler) für eine Kennzahl zur Anzeige der gültigen
Bytegrenze (z.B. BG2) bestehen.

25. Anordnung nach Anspruch 24 in Verbindung mit
Anspruch 21, d a d u r c h   g e k e n n z e i c h n e t ,
daß die Speicher aus einem zusätzlichen Datenzeichenabschnitt je Datum im Basisspeicher (B-SP) bestehen, der vor jeder Auswahl des zugehörigen Datums der Kettungssteuerung (KG-ST) der zugehörigen Verknüpfungseinheit (ALV) zugeführt wird.

26. Anordnung nach einem der Ansprüche 19 bis 25, insbesondere zur Durchführung des Verfahrens nach Anspruch 9, g e k e n n z e i c h n e t   durch individuelle Markierbits je Datum mit adressenabhängiger Auswahlsteuerung und einer gemeinsamen Überwachungseinrichtung zur Freigabe der Prüfung bzw. zur Umsteuerung auf das nachfolgende Datum.

27. Anordnung nach einem der Ansprüche 19 bis 25, insbesondere zur Durchführung des Verfahrens nach Anspruch 10, g e k e n n z e i c h n e t   durch wenigstens einen zusätzlichen Adressenspeicher für die Zwischenspeicherung der Adressen von durch Treffer gekennzeichneten Daten während eines Suchlaufes und durch Einrichtungen zur Übernahme der zwischengespeicherten Adressen (T-AD) für die Auswahl der zugehörigen Daten im Basisspeicher (B-SP).

28. Anordnung nach einem der Ansprüche 19 bis 25, insbesondere zur Durchführung des Verfahrens nach Anspruch 11 oder 12, g e k e n n z e i c h n e t   durch einen Hilfsspeicher (H-SP) als Bestandteil des Basisspeichers (B-SP) zur Übernahme von durch Treffer gekennzeichneten Daten für die Endsortierung durch die assoziative Oberfläche (ASS-FL).

29. Anordnung nach einem der Ansprüche 19 bis 28, insbesondere zur Durchführung der Verfahren nach Anspruch 14 oder 15, g e k e n n z e i c h n e t

- durch einen Hybrid-Assozitivspeicher mit einer assoziativen Oberfläche (ASS-FL), die aus einer Vielzahl von in einer oder mehreren Gruppen zusammengefaßten Verknüpfungseinheiten (ALV) besteht und mit einem Basisspeicher (B-SP) für große Datenmengen, der entsprechend der assoziativen Oberfläche (ASS-FL) aus in einer oder mehreren Gruppen zusammengefaßten vertikalen Speichersäulen besteht, von denen jede mit einer Verknüpfungseinheit (ALV) der assoziativen Oberfläche (ASS-FL) zusammenarbeitet, jede Speichersäule der Breite eines Datenzeichens entspricht und die Datenzeichen der Daten vertikal nacheinander gespeichert enthält, so daß einander entsprechende Zeichen der Daten aller Speichersäulen gleichzeitig der assoziativen Oberfläche (ASS-FL) zur Prüfung zugeführt werden können,

- durch einen in dem Basisspeicher (B-SP) als Hilfsspeicher (H-SP) vorgesehenen Speicherbereich zur Aufnahme je eines Datums je Speichersäule,

- durch eine Einrichtung zur Einspeicherung der durch Treffer ermittelten Daten von der assoziativen Oberfläche (ASS-FL) in freie Abschnitte dieses Bereiches, so daß diese ebenfalls gleichzeitig von der assoziativen Oberfläche (ASS-FL) überprüft und aussortiert werden können,

- durch eine in die Verknüpfungseinheiten (ALV) integrierte Kettungssteuerung (KG-ST) mit einem Kettungselement (KG-FF) und

- durch in die Verknüpfungseinheiten (ALV) integrierte Einrichtungen zur Sperrung jeweils der Verknüpfungseinheit, deren zugehöriges Datum im Hilfsspeicher (H-SP) aussortiert worden ist.


30. Anordnung nach Anspruch 29, d a d u r c h  g e - k e n n z e i c h n e t , daß die jeweils eine Gruppe bildenden Speichersäulen gemeinsam zeilenweise ansteuerbar sind und eine der Anzahl von Speichersäulen entsprechende Anzahl von Zeilen ein Speicherfeld bilden,
in das in jede Zeile eine aus einer der Anzahl von Speichersäulen entsprechende Anzahl von Datenzeichen bestehende Dateneinheit schlagartig ein- oder ausgespeichert werden kann, daß jeweils durch versetzte Einordnung der Datenzeichen von Dateneinheiten entsprechend
vieler Daten gemäß einem vorgegebenen Einordnungsschema
in Verbindung mit intern gesteuerten Adressenumordnern
für die Zeilenadressen und Umordnern für die Datenzeichen der betroffenen Dateneinheiten entweder alle Datenzeichen einer Dateneinheit oder aber die einander entsprechenden Datenzeichen der entsprechenden Zahl verschiedener Dateneinheiten als jeweils eine Dateneinheit
zur assoziativen Oberfläche (ASS-FL) durchschaltbar
sind.

# FIG 1

| T = ? | LSB = ? | SBM - Änderung | |
|---|---|---|---|
| | | vorw. sortieren | rückw. sortieren |
| > 1 | = X | 0 anhängen | 1 anhängen |
| = 0,1 | = 0 | LSB invertieren | LSB streichen |
| | = 1 | LSB streichen | LSB invertieren |

A =   0 0 0 1 0

B =   0 0 1 0 1       FIG 2

C =   1 0 0 1 0

| SBM | LSB | T | SMB - Änderung | Ausgabe |
|---|---|---|---|---|
| 0 | 0 | > 1 | 0 anhängen | |
| 0 0 | 0 | > 1 | 0 anhängen | |
| 0 0 0 | 0 | = 1 | LSB invertieren | A |
| 0 0 1 | 1 | = 1 | LSB streichen | B |
| 0 0 | 0 | = 0 | LSB invertieren | |
| 0 1 | 1 | = 0 | LSB streichen | |
| 0 | 0 | = 0 | LSB invertieren | |
| 1 | 1 | = 1 | LSB streichen | C |

0143148

# FIG 3A

| AWL | SL | SBM DAT | BYTE 1 (BG1) | BYTE 2 (BG2) | BYTE 3 | $T_E$ | $T_{GES}$ |
|---|---|---|---|---|---|---|---|
|  | 1 |  | 0 |  |  |  | >1 |
|  | 2 |  | 0 0 |  |  |  | >1 |
|  | 3 |  | 0 0 0 |  |  |  | >1 |
|  | 4 |  | 0 0 0 0 |  |  |  | >1 |
|  | 5 | 1 | 0 0 0 0 |  |  | =1 |  |
|  |  |  |  | 0 |  | =1 |  |
|  |  | 2 | 0 0 0 0 |  |  | =0 |  |
|  |  | 3 | 0 0 0 0 |  |  | =1 |  |
|  |  |  |  | 0 |  | =0 |  |
|  |  | 4 | 0 0 0 0 |  |  | =0 |  |
|  |  | 5 | 0 0 0 0 |  |  | =1 |  |
|  |  |  |  | 0 |  | =1 |  |
|  |  | 6 | 0 0 0 0 |  |  | =1 |  |
|  |  |  |  | 0 |  | =0 |  |
|  |  | n | 0 0 0 0 |  |  | =1 |  |
|  |  |  |  | 0 |  | =0 | >1 |
|  | 6 | 1 | 0 0 0 0 |  |  | =1 |  |
|  |  |  |  | 0 0 |  | =1 |  |
|  |  | 2 | 0 0 0 0 |  |  | =0 |  |
|  |  | 3 | 0 0 0 0 |  |  | =1 |  |
|  |  |  |  | 0 0 |  | =0 |  |
|  |  | 4 | 0 0 0 0 |  |  | =0 |  |
|  |  | 5 | 0 0 0 0 |  |  | =1 |  |
|  |  |  |  | 0 0 |  | =0 |  |
|  |  | 6 | 0 0 0 0 |  |  | =1 |  |
|  |  |  |  | 0 0 |  | =0 |  |
|  |  | n | 0 0 0 0 |  |  | =1 |  |
|  |  |  |  | 0 0 |  | =0 | =1 |
| 1 |  | 1 | 0 0 0 0 |  |  | =1 |  |
|  |  |  |  | 0 0 |  | =1 | =1 |
|  | 7 | 1 |  |  |  | A |  |
|  |  | 2 | 0 0 0 0 |  |  | =0 |  |
|  |  | 3 | 0 0 0 0 |  |  | =1 |  |
|  |  |  |  | 0 1 |  | =0 |  |
|  |  | 4 | 0 0 0 0 |  |  | =0 |  |
|  |  | 5 | 0 0 0 0 |  |  | =1 |  |
|  |  |  |  | 0 1 |  | =1 |  |
|  |  | 6 | 0 0 0 0 |  |  | =1 |  |
|  |  |  |  | 0 1 |  | =0 |  |
|  |  | n | 0 0 0 0 |  |  | =1 |  |
|  |  |  |  | 0 1 |  | =0 | =1 |
| 2 |  | 1 |  |  |  | A |  |
|  |  | 2 | 0 0 0 0 |  |  | =0 |  |
|  |  | 5 | 0 0 0 0 |  |  | =1 |  |
|  |  |  |  | 0 1 |  | =1 | =1 |

→ SBM-SP: BYTE 1

→ L/AD 11

→ L/AD 12

AB

→ AUS 1  
[ 0 0 0 0 | 0 0 ... ]

→ AUS 2  
[ 0 0 0 0 | 0 1 ... ]

0143148

FIG 3B

| AWL | SL | SBM DAT | BYTE 1 (BG 1) | BYTE 2 (BG 2) | BYTE 3 | $T_E$ | $T_{GES}$ |
|---|---|---|---|---|---|---|---|
| | 8 | 1 | | | | A | |
| | | 2 | 0 0 0 0 | | | = 0 | |
| | | 3 | 0 0 0 0 | | | = 1 | |
| | | | | 0 | | = 0 | |
| | | 4 | 0 0 0 0 | | | = 0 | |
| | | 5 | | | | A | |
| | | 6 | 0 0 0 0 | | | = 1 | |
| | | | | 0 | | = 0 | |
| | | ↓ | | | | | |
| | | n | 0 0 0 0 | | | = 1 | |
| | | | | 0 | | = 0 | = 0 |
| | 9 | 1 | | | | A | |
| | | 2 | 0 0 0 0 | | | = 0 | |
| | | 3 | 0 0 0 0 | | | = 1 | |
| | | | | 1 | | = 1 | |
| | | 4 | 0 0 0 0 | | | = 0 | |
| | | 5 | | | | A | |
| | | 6 | 0 0 0 0 | | | = 1 | |
| | | | | 1 | | = 1 | |
| | | ↓ | | | | | |
| | | n | 0 0 0 0 | | | = 1 | |
| | | | | 1 | | = 1 | > 1 |
| | 10 | 1 | | | | A | |
| | | 2 | 0 0 0 0 | | | = 0 | |
| | | 3 | 0 0 0 0 | | | = 1 | |
| | | | | 1 0 | | = 1 | |
| | | 4 | 0 0 0 0 | | | = 0 | |
| | | 5 | | | | A | |
| | | 6 | 0 0 0 0 | | | = 1 | |
| | | | | 1 0 | | = 0 | |
| | | ↓ | | | | | |
| | | n | 0 0 0 0 | | | = 1 | |
| | | | | 1 0 | | = 1 | > 1 |
| | 11 | 1 | | | | A | |
| | | 2 | 0 0 0 0 | | | = 0 | |
| | | 3 | 0 0 0 0 | | | = 1 | |
| | | | | 1 0 0 | | = 0 | |
| | | 4 | 0 0 0 0 | | | = 0 | |
| | | 5 | | | | A | |
| | | 6 | 0 0 0 0 | | | = 1 | |
| | | | | 1 0 0 | | = 0 | |
| | | ↓ | | | | | |
| | | n | 0 0 0 0 | | | = 1 | |
| | | | | 1 0 0 | | = 1 | = 1 |
| 3 | | 1 | | | | A | |
| | | ↓ | | | | | |
| | | n | 0 0 0 0 | | | = 1 | |
| | | | | 1 0 0 | | = 1 | = 1 |

→ L/AD 21

→ L/AD 22
— AB
→ L/AD 23

— AB

→ AUS 3

| 0 0 0 0 | 1 0 0 ... |

0143148

## FIG 3C

| AWL | SL | SBM DRT | | BYTE 1 (BG1) | BYTE 2 (BG2) | BYTE 3 | $T_E$ | $T_{GES}$ |
|---|---|---|---|---|---|---|---|---|
| | 12 | 1 | | | | | A | |
| | | 2 | | 0 0 0 0 | | | = 0 | |
| | | 3 | | 0 0 0 0 | | | = 1 | |
| | | | | | 1 0 1 | | = 1 | |
| | | 4 | | 0 0 0 0 | | | = 0 | |
| | | 5 | | | | | A | |
| | | 6 | | 0 0 0 0 | | | = 1 | |
| | | | | | 1 0 1 | | = 0 | |
| | | ↓ | | | | | | |
| | | n | | | | | A | = 1 |
| 4 | | 1 | | | | | A | |
| | | 2 | | 0 0 0 0 | | | = 0 | |
| | | 3 | | 0 0 0 0 | | | = 1 | |
| | | | | | 1 0 1 | | = 1 | = 1 |
| | 13 | 1 | | 0 0 0 0 | | | A = 0 | |
| | | 2 | | | | | | |
| | | 3 | | 0 0 0 0 | | | A = 0 | |
| | | 4 | | | | | | |
| | | 5 | | 0 0 0 0 | | | A = 1 | |
| | | 6 | | | 1 0 | | = 0 | |
| | | ↓ | | | | | | |
| | | n | | | | | A | = 0 |
| | 14 | 1 | | 0 0 0 0 | | | A = 0 | |
| | | 2 | | | | | | |
| | | 3 | | 0 0 0 0 | | | A = 0 | |
| | | 4 | | | | | | |
| | | 5 | | 0 0 0 0 | | | A = 1 | |
| | | 6 | | | 1 1 | | = 1 | |
| | | ↓ | | | | | | |
| | | n | | | | | A | = 1 |
| 5 | | 1 | | | | | A | |
| | | ↓ | | | | | | |
| | | 6 | | 0 0 0 0 | | | = 1 | |
| | | | | | 1 1 | | = 1 | = 1 |

→ AUS 4

| 0 0 0 0 | 1 0 1 ... |
|---|---|

→ AUS 5

| 0 0 0 0 | 1 1 ... |
|---|---|

## FIG 5

|  | | BG1 | BG2 | BG3 | |
|---|---|---|---|---|---|
| DAT 1: | 0 0 0 0 | 0 0 0 1 | 0 0 0 0 | 0 0 0 1 | |
| DAT 2: | 0 0 0 0 | 0 0 0 1 | 0 0 0 1 | 0 0 0 1 | |
| DAT 3: | 0 0 0 0 | 0 0 0 1 | 0 0 0 1 | 0 0 0 0 | |

| AWL | SL | SBM DAT | BYTE 1 (BG 1) | BYTE 2 (BG 2) | BYTE 3 | $T_E$ | KG | $T_K$ | $T_{GES}$ | |
|---|---|---|---|---|---|---|---|---|---|---|
| | 1 | | 0 | | | | | | > 1 | |
| | 2 | | 0 0 | | | | | | > 1 | |
| | 3 | | 0 0 0 | | | | | | > 1 | |
| | 4 | | 0 0 0 0 | | | | | | > 1 | → SBM-SP |
| | 5 | 1 | | 0 | | 1 | 1 | 1 | | → L/AD 11 |
| | | 2 | | 0 | | 0 | 0 | 0 | | |
| | | 3 | | 0 | | 0 | 1 | 0 | | |
| | | 4 | | 0 | | 0 | 0 | 0 | | |
| | | 5 | | 0 | | 1 | 1 | 1 | | → L/AD 12 |
| | | 6 | | 0 | | 0 | 1 | 0 | | AB |
| | | ↓n | | 0 | | 0 | 1 | 0 | > 1 | |
| | 6 | 1 | | 0 0 | | 1 | 1 | 1 | | |
| | | 2 | | 0 0 | | 1 | 0 | 0 | | |
| | | 3 | | 0 0 | | 0 | 1 | 0 | | |
| | | 4 | | 0 0 | | 0 | 0 | 0 | | |
| | | 5 | | 0 0 | | 0 | 1 | 0 | | |
| | | 6 | | 0 0 | | 0 | 1 | 0 | | |
| | | ↓n | | 0 0 | | 0 | 1 | 0 | = 1 | |
| 1 | 1 | 1 | | 0 0 | | 1 | 1 | 1 | = 1 | → AUS 1 |
| | | | | | | | | | | 0 0 0 0 | 0 0 ... |
| | 7 | 1 | | 0 1 | | A | 0 | 0 | | |
| | | 2 | | 0 1 | | 0 | 1 | 0 | | |
| | | 3 | | 0 1 | | 0 | 0 | 0 | | |
| | | 4 | | 0 1 | | 0 | 1 | 0 | | |
| | | 5 | | 0 1 | | 1 | 1 | 1 | | |
| | | 6 | | 0 1 | | 0 | 1 | 0 | | |
| | | ↓n | | 0 1 | | 0 | 1 | 0 | = 1 | |
| 2 | 1 | | | | | A | | | | |
| | ↓5 | | | 0 1 | | 1 | 1 | 1 | = 1 | → AUS 2 |
| | | | | | | | | | | 0 0 0 0 | 0 1 ... |
| | 8 | 1 | | 0 | | A | 0 | 0 | | |
| | | 2 | | 0 | | 0 | 1 | 0 | | |
| | | 3 | | 0 | | 0 | 0 | 0 | | |
| | | 4 | | 0 | | 0 | 1 | 0 | | |
| | | 5 | | 0 | | A | 1 | 0 | | |
| | | 6 | | 0 | | 0 | 1 | 0 | | |
| | | ↓n | | 0 | | 0 | 1 | 0 | = 0 | |
| | 9 | 1 | | 1 | | A | 0 | 0 | | |
| | | 2 | | 1 | | 0 | 1 | 1 | | |
| | | 3 | | 1 | | 1 | 0 | 0 | | → L/AD 21 |
| | | 4 | | 1 | | 1 | | | | |
| | | 5 | | 1 | | A | | | | |
| | | 6 | | 1 | | 1 | 1 | 1 | | → L/AD 22 |
| | | | | | | | | | | AB |
| | | ↓n | | 1 | | 1 | 1 | 1 | > 1 | → L/AD 23 |

0143148

**FIG 4B**

| AWL | SL | SBM DAT | BYTE 1 | BG 1 BYTE 2 | BG 2 BYTE 3 | $T_E$ | KG | $T_K$ | $T_{GES}$ | |
|---|---|---|---|---|---|---|---|---|---|---|
| | 10 | 1 | | 1 0 | | A | | | | |
| | | 2 | | 1 0 | | 0 | 0 | 0 | | |
| | | 3 | | 1 0 | | 1 | 1 | 1 | | |
| | | 4 | | 1 0 | | 1 | 0 | 0 | | |
| | | 5 | | 1 0 | | A | | | | |
| | | 6 | | 1 0 | | 0 | 1 | 0 | | |
| | | ↓ n | | 1 0 | | 1 | 1 | 1 | > 1 | ⟩ AB |
| | 11 | 1 | | 1 0 0 | | A | | | | |
| | | 2 | | 1 0 0 | | 0 | 0 | 0 | | |
| | | 3 | | 1 0 0 | | 0 | 1 | 0 | | |
| | | 4 | | 1 0 0 | | 1 | 0 | 0 | | |
| | | 5 | | 1 0 0 | | A | | | | |
| | | 6 | | 1 0 0 | | 0 | 1 | 0 | | |
| | | ↓ n | | 1 0 0 | | 1 | 1 | 1 | = 1 | |
| 3 | | 1 | | 1 0 0 | | A | | | | |
| | | ↓ n | | 1 0 0 | | 1 | 1 | 1 | = 1 | → AUS 3 `0000 100...` |
| | 12 | 1 | | 1 0 1 | | A | | | | |
| | | 2 | | 1 0 1 | | 0 | 0 | 0 | | |
| | | 3 | | 1 0 1 | | 1 | 1 | 1 | | |
| | | 4 | | 1 0 1 | | 0 | 0 | 0 | | |
| | | 5 | | 1 0 1 | | A | | | | |
| | | 6 | | 1 0 1 | | 0 | 1 | 0 | | |
| | | ↓ n | | 1 0 1 | | A | | | = 1 | |
| 4 | | 1 | | 1 0 1 | | A | | | | |
| | | 2 | | 1 0 1 | | 0 | 0 | 0 | | |
| | | 3 | | 1 0 1 | | 1 | 1 | 1 | = 1 | → AUS 4 `0000 101...` |
| | 13 | 1 | | 1 0 | | A | | | | |
| | | 2 | | 1 0 | | 0 | 0 | 0 | | |
| | | 3 | | 1 0 | | A | | | | |
| | | 4 | | 1 0 | | 1 | 0 | 0 | | |
| | | 5 | | 1 0 | | A | | | | |
| | | 6 | | 1 0 | | 0 | 1 | 0 | | |
| | | ↓ n | | 1 0 | | A | | | = 0 | |
| | 14 | 1 | | 1 1 | | A | | | | |
| | | 2 | | 1 1 | | 0 | 0 | 0 | | |
| | | 3 | | 1 1 | | A | | | | |
| | | 4 | | 1 1 | | 1 | 0 | 0 | | |
| | | 5 | | 1 1 | | A | | | | |
| | | 6 | | 1 1 | | 1 | 1 | 1 | | |
| | | ↓ n | | 1 1 | | A | | | = 1 | |
| 5 | | 1 | | 1 1 | | A | | | | |
| | | ↓ 6 | | 1 1 | | 1 | 1 | 1 | = 1 | → AUS 5 `0000 11...` |

FIG 6

0143148

8/11

FIG 7

FIG 8

FIG 9

0143148

# FIG 10

FIG 11

**Europäisches Patentamt**

**EUROPÄISCHER RECHERCHENBERICHT**

0143148
Nummer der Anmeldung

EP 84 10 3498

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | DE-A-3 009 330 (SIEMENS)<br><br>--- | 1,19 | G 06 F 7/24<br>G 06 F 15/40 |
| A,D | DE-A-2 342 660 (SIEMENS)<br><br>----- | 1,19 | |
| | | | **RECHERCHIERTE SACHGEBIETE (Int. Cl.4)**<br><br>G 06 F |

Der vorliegende Recherchenbericht wurde für alle Patentansprüche erstellt.

| Recherchenort | Abschlußdatum der Recherche | Prüfer |
|---|---|---|
| DEN HAAG | 21-12-1984 | THOMAES K. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82